(19) Europäisches Patentamt
European Patent Office
Office européen des brevets

(11) **EP 3 545 025 B1**

(12) **EUROPÄISCHE PATENTSCHRIFT**

(45) Veröffentlichungstag und Bekanntmachung des Hinweises auf die Patenterteilung:
**12.10.2022 Patentblatt 2022/41**

(21) Anmeldenummer: **17809230.0**

(22) Anmeldetag: **22.11.2017**

(51) Internationale Patentklassifikation (IPC):
**C08J 7/043** (2020.01)    **B29C 71/00** (2006.01)
**B33Y 40/00** (2020.01)    **B33Y 80/00** (2015.01)
**C08G 18/08** (2006.01)    **C08G 18/10** (2006.01)
**C09D 175/08** (2006.01)    **C09D 175/06** (2006.01)
**C08G 18/12** (2006.01)    **C08G 18/76** (2006.01)
**C08G 18/73** (2006.01)    **C08G 18/75** (2006.01)
**C08G 18/28** (2006.01)    **C08G 18/66** (2006.01)
**C08G 18/48** (2006.01)    **C08G 18/44** (2006.01)
**C08G 18/42** (2006.01)    **C08G 18/38** (2006.01)
**C08J 7/046** (2020.01)    **C08J 7/04** (2020.01)
**B29C 64/153** (2017.01)

(52) Gemeinsame Patentklassifikation (CPC):
(C-Sets verfügbar)
**B29C 71/0009; B33Y 40/00; B33Y 80/00;
C08G 18/0828; C08G 18/10; C08G 18/12;
C08G 18/2825; C08G 18/283; C08G 18/3206;
C08G 18/3857; C08G 18/4018; C08G 18/4238;
C08G 18/44; C08G 18/4808; C08G 18/4854;**

(Forts.)

(86) Internationale Anmeldenummer:
**PCT/EP2017/080037**

(87) Internationale Veröffentlichungsnummer:
**WO 2018/095967 (31.05.2018 Gazette 2018/22)**

(54) **VERFAHREN ZUR HERSTELLUNG EINES ZUMINDEST TEILWEISE BESCHICHTETEN GEGENSTANDS**

METHOD FOR PRODUCING AN AT LEAST PARTIALLY COATED OBJECT

PROCÉDÉ DE FABRICATION D'UN OBJET REVÊTU AU MOINS PARTIELLEMENT

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **25.11.2016 EP 16200725**

(43) Veröffentlichungstag der Anmeldung:
**02.10.2019 Patentblatt 2019/40**

(73) Patentinhaber: **Covestro Deutschland AG
51373 Leverkusen (DE)**

(72) Erfinder:
- **ACHTEN, Dirk
  51375 Leverkusen (DE)**
- **BÜSGEN, Thomas
  51377 Leverkusen (DE)**
- **MICHAELIS, Thomas
  51375 Leverkusen (DE)**
- **WAGNER, Roland
  51375 Leverkusen (DE)**
- **METTMANN, Bettina
  41542 Dormagen (DE)**
- **AKBAS, Levent
  58455 Witten (DE)**
- **HÄTTIG, Jürgen
  51519 Odenthal (DE)**

- **GUEDOU, Arnaud**
  **77700 Bailly Romainvilliers (FR)**

(74) Vertreter: **Davepon, Björn**
**Patentanwaltskanzlei Davepon**
**Schloss Dyck**
**41363 Jüchen (DE)**

(56) Entgegenhaltungen:
**EP-A1- 2 772 917     WO-A1-2015/197515**
**DE-A1- 10 313 452     DE-A1-102004 020 452**
**US-A1- 2007 020 463     US-A1- 2009 092 647**

- **ZHU JIAYI ET AL: "Water-based coatings for 3D printed parts", JOURNAL OF COATINGS TECHNOLOGY AND RESEARCH, SPRINGER NEW YORK LLC, US, Bd. 12, Nr. 5, 30. Juli 2015 (2015-07-30), Seiten 889-897, XP035529449, ISSN: 1547-0091, DOI: 10.1007/S11998-015-9710-3 [gefunden am 2015-07-30]**
- **ANUWAT SAETUNG ET AL: "The chain extender content and NCO/OH ratio flexibly tune the properties of natural rubber-based waterborne polyurethanes", JOURNAL OF APPLIED POLYMER SCIENCE, Bd. 132, Nr. 36, 6. Juni 2015 (2015-06-06) , Seiten 1-12, XP055375621, US ISSN: 0021-8995, DOI: 10.1002/app.42505**

- **Keith W Grauer: "Fused Deposition Modeling The Most Popular 3D Printing Method", , 26. März 2015 (2015-03-26), XP055375651, Gefunden im Internet: URL:http://sites.psu.edu/keithgrauerportfo lio/wp-content/uploads/sites/26487/2015/04 /Defining-Fused-Deposition-Modeling1.pdf [gefunden am 2017-05-24]**

(52) Gemeinsame Patentklassifikation (CPC): (Forts.)
**C08G 18/664; C08G 18/73; C08G 18/755; C08G 18/7671; C08J 7/0427; C08J 7/043; C08J 7/046; C09D 175/06; C09D 175/08;**
B29C 64/153; B29K 2075/00; C08J 2375/04; C08J 2433/10

C-Sets
**C08G 18/10, C08G 18/3228; C08G 18/10, C08G 18/3857; C08G 18/12, C08G 18/3228; C08G 18/12, C08G 18/3234**

**Beschreibung**

Die vorliegende Erfindung betrifft ein Verfahren zur Herstellung eines zumindest teilweise beschichteten Gegenstands, umfassend den Schritt der Herstellung des Gegenstands mittels eines additiven Fertigungsverfahrens aus einem Aufbaumaterial, wobei das Aufbaumaterial ein thermoplastisches Polyurethan-Material umfasst. Die Erfindung betrifft weiterhin einen zumindest teilweise beschichteten Gegenstand, der durch ein erfindungsgemäßes Verfahren erhalten wurde.

Es ist bekannt, Kunststoffgegenstände in einem additiven Fertigungsverfahren, beispielsweise in einem Pulversinterverfahren, herzustellen, wobei die Gegenstände schichtweise aufgebaut werden. Die additiven Fertigungsverfahren werden auch als 3D-Druckverfahren ("3D printing") bezeichnet. Als Ausgangsmaterial für die in einem 3D-Druckverfahren herzustellenden Gegenstände können etwa Polyamide oder thermoplastisches Polyurethan verwendet werden. Die Verwendung derartiger Kunststoffe für die Herstellung von Kunststoffgegenständen in einem 3D-Druckverfahren hat den Nachteil, dass die Oberfläche der Gegenstände porös ist und damit einerseits einem erhöhten Verschleiß unterliegt und andererseits durch die poröse Oberflächenstruktur Schmutz verhältnismäßig leicht an der Oberfläche haften bleibt. Die Ästhetik des Gegenstandes kann so erheblich beeinträchtigt werden. Darüber hinaus kann die poröse Oberfläche der Gegenstände die Haptik negativ beeinflussen. Ferner können die Gegenstände je nach verwendetem Druckmaterial Wasser bzw. Feuchtigkeit aufnehmen, was die Struktur und/oder die Stabilität der Gegenstände negativ beeinflussen kann.

Um die poröse Oberfläche von solchen Gegenständen zumindest teilweise zu beseitigen, ist es im Stand der Technik bekannt, die Oberfläche der Kunststoffgegenstände zu schleifen und/oder zu polieren. Damit kann die Oberfläche der Kunststoffgegenstände zwar glatter ausgestaltet werden. Allerdings ist ein weitgehendes Beseitigen der Poren nur mit erheblichem Aufwand möglich, sodass in der Regel auch nach dem Polieren nicht gewährleistet ist, dass kein Schmutz an der Oberfläche haften bleibt.

Ein Polieren der Oberfläche ist allerdings nicht in jedem Fall möglich. Weil beim Polieren Material von der Oberfläche abgetragen wird, kann die Geometrie des Gegenstandes geändert werden, was in manchen Fällen nicht erwünscht ist. Zudem kann selbst durch ein Polieren der Oberfläche nicht gewährleistet werden, dass diese fluidabweisend, insbesondere wasserabweisend, sowie wasserdicht ist. Je nach verwendetem Material bei der Herstellung solcher Kunststoffgegenstände ist es jedoch gewünscht, dass die Oberfläche wasserabweisend oder wasserdicht ist.

WO 2016/030490 A1 offenbart ein Verfahren zum Imprägnieren von in einem 3D-Druckverfahren, insbesondere von in einem pulverbasierten Fertigungs- bzw. Druckverfahren hergestellten Formteilen mit einem flüssigen und/oder spritzfähigen Imprägniermittel, wobei das Imprägniermittel 25 bis 95 Gew.-% eines Lösungsmittels oder Lösungsmittelgemisches und auf 100 Gew.-% ergänzte Anteile eines in dem Lösungsmittel oder Lösungsmittelgemisch auflösbaren Kunststoffes oder Kunststoffgemisches aufweist, jeweils bezogen auf die Gesamtzusammensetzung des Imprägniermittels, und wobei das Imprägniermittel auf die zu imprägnierende Oberfläche des Formteils aufgebracht wird und nach dem Aufbringen des Imprägniermittels die imprägnierte Oberfläche getrocknet wird. Nachteilig hieran ist jedoch der Einsatz eines Lösungsmittels, welches unter Gesichtspunkten des Umweltschutzes vermieden werden sollte.

Die Publikation "Water-based coatings for 3D printed parts" von Jiayi Zhu, Julia L. Chen, Robert K. Lade Jr., Wieslaw J. Suszynski und Lorraine F. Francis in J. Coat. Technol. Res., 12 (5) 889-897, 2015 (DOI 10.1007/s11998-015-9710-3) beschreibt die Herstellung von Probenkörpern mittels FDM-Verfahren (fused deposition modeling) mit Acrylnitril-Butadien-Styrol-Copolymer (ABS) als Aufbaumaterial. Diese Probenkörper wurden mit zwei kommerziell erhältlichen Polyurethandispersionen beschichtet. Aufgrund der chemischen Verschiedenheit des ABS-Substrats zu einer Polyurethanbeschichtung ist es jedoch fraglich, wie stark die Haftung der Beschichtung an solchen Substraten ist.

Eine Aufgabe der vorliegenden Erfindung ist es, mindestens einen Nachteil des Standes der Technik wenigstens zu einem Teil zu überwinden. Weiterhin stellt sich die vorliegende Erfindung die Aufgabe, ein integriertes additives Herstellungsverfahren anzugeben, mit dem die Haptik des herstellten Gegenstands verbessert wird bei gleichzeitig verbesserter Haftung seiner Beschichtung. Des Weiteren war eine Aufgabe der Erfindung, einen Gegenstand möglichst kosteneffizient und/oder individualisiert und/oder ressourcenschonend herstellen zu können.

Erfindungsgemäß gelöst wird die Aufgabe durch ein Verfahren gemäß Anspruch 1. Ein durch ein erfindungsgemäßes Verfahren erhaltener, zumindest teilweise beschichteter Gegenstand ist in Anspruch 15 erwähnt. Vorteilhafte Weiterbildungen sind in den Unteransprüchen angegeben. Sie können beliebig kombiniert werden, sofern sich aus dem Kontext nicht eindeutig das Gegenteil ergibt.

Ein Verfahren zur Herstellung eines zumindest teilweise beschichteten Gegenstands, umfassend den Schritt der Herstellung des Gegenstands mittels eines additiven Fertigungsverfahrens aus einem Aufbaumaterial, wobei das Aufbaumaterial ein thermoplastisches Polyurethan-Material umfasst, zeichnet sich dadurch aus, dass das Verfahren nach der Herstellung des Gegenstands weiterhin den Schritt umfasst:

zumindest teilweises Kontaktieren des Gegenstands mit einer Zubereitung, welche ausgewählt ist aus:

- wässrige Polyurethan-Dispersion,

- wässrige Dispersion eines OH-Gruppen aufweisenden Polymers, wobei diese Dispersion weiterhin eine NCO-Gruppen aufweisende Verbindung enthält,

- wässrige Zubereitung einer NCO-Gruppen enthaltende Verbindung, wobei diese Zubereitung keine OH-Gruppen aufweisenden Polymere enthält

oder eine Kombination aus mindestens zwei hiervon.

Unter Kombination aus mindestens zwei der genannten Zubereitungen wird sowohl eine Mischung aus mindesten zwei der genannten Dispersionen oder wässrigen Zubereitungen verstanden als auch eine Abfolge von Kontaktierungen des Gegenstandes mit den verschiedenen ausgewählten Zubereitungen.

Das additive Fertigungsverfahren kann beispielsweise ausgewählt sein aus Schmelzschichtung (Fused Filament Fabrication, FFF oder Fused Deposition Modeling, FDM), Ink-Jet-Printing, Photopolymer-Jetting, Selective Laser Sintering, Selective Laser Melting, Binder Jetting based additive manufacturing, Multijet Fusion based additive manufacturing, High Speed Sintering Process und Laminated Object Modelling. Vorzugsweise ist das additive Fertigungsverfahren ein Sinterverfahren.

Sinterverfahren sind im Kontext der vorliegenden Erfindung Verfahren, welche insbesondere thermoplastische Pulver nutzen, um Gegenstände schichtweise aufzubauen. Hierbei werden über einen so genannten Beschichter dünne Pulverschichten aufgetragen und anschließend mittels einer Energiequelle selektiv aufgeschmolzen. Das umgebende Pulver stützt dabei die Bauteilgeometrie. Komplexe Geometrien sind dadurch wirtschaftlicher zu fertigen als beim FDM-Verfahren. Zudem können verschiedene Gegenstände eng gepackt im so genannten Pulverbett angeordnet beziehungsweise gefertigt werden. Aufgrund dieser Vorteile gelten pulverbasierte additive Fertigungsverfahren zu den wirtschaftlichsten additiven Herstellungsverfahren am Markt. Sie werden daher überwiegend von industriellen Nutzern verwendet. Beispiele für pulverbasierte additive Fertigungsverfahren sind das sogenannte Lasersintern (SLS, Selective Laser Sintering) oder das High Speed Sintering (HSS). Sie unterscheiden sich untereinander in der Methode, um die Energie für das selektive Aufschmelzen in den Kunststoff einzutragen. Beim Lasersinterverfahren erfolgt der Energieeintrag über einen gelenkten Laserstrahl. Beim so genannten High Speed Sintering (HSS)-Verfahren erfolgt der Energieeintrag über Infrarot (IR)-Strahler in Kombination mit einem selektiv in das Pulverbett gedruckten IR-Absorber. Das so genannte Selective Heat Sintering (SHS) nutzt die Druckeinheit eines konventionellen Thermodruckers, um thermoplastische Pulver selektiv aufzuschmelzen. Bevorzugt sind selektive Lasersinterverfahren (SLS).

Das thermoplastische Polyurethan-Material ist vorzugsweise elastisch, das heißt, dass es eine Bruchdehnung im Zugversuchstest nach DIN 53504 von $\geq$ 50% zeigt. Darüber hinaus kann das Material beispielsweise einen Druckverformungsrest nach 25% Kompression (DIN 53517) von absolut $\leq$ 10% aufweisen.

Das thermoplastische Polyurethan-Material kann noch weitere Additive wie Füllstoffe, Stabilisatoren und dergleichen, aber auch weitere Polymere, enthalten. Der Gesamtgehalt an Additiven im elastischen Polymer kann beispielsweise $\geq$ 0,1 Gewichts-% bis $\leq$ 70 Gewichts-%, bevorzugt $\geq$ 1 Gewichts-% bis $\leq$ 30 Gewichts-%, betragen.

Im erfindungsgemäßen Verfahren wird der Gegenstand nach seiner Herstellung zumindest teilweise mit einer Zubereitung kontaktiert. Das Kontaktieren kann durch Eintauchen, Bestreichen, Aufsprühen oder andere bekannte Applikationsverfahren für wässrige Dispersionen erfolgen. Ein Trocknen des Gegenstands nach dem Kontaktierungsschritt kann beispielsweise bei Raumtemperatur (20 °C), bei erhöhter Temperatur und wahlweise mit Vakuumunterstützung erfolgen. Durch das Trocknen wird das Wasser der Zubereitung entfernt. Vorzugsweise ist die Zubereitung frei von organischen Lösungsmitteln.

Die Zubereitung kann eine wässrige Polyurethan-Dispersion sein. In diesen liegen Partikel eines Polyurethan-Polymers in einer wässrigen Phase dispergiert vor. Solche Dispersionen werden auch als Einkomponenten- oder 1K-Dispersionen bezeichnet. Durch Trocknen der Dispersion kann eine Koaleszenz der Partikel und somit eine Filmbildung erfolgen. Prinzipiell können alle bekannten wässrigen Polyurethan-Dispersionen eingesetzt werden. Bevorzugt sind jedoch anionisch hydrophilierte und anionische/nichtionisch hydrophilierte Polyurethan-Dispersionen.

Die Zubereitung kann ferner eine wässrige Dispersion eines OH-Gruppen aufweisenden Polymers sein, wobei diese Dispersion weiterhin eine NCO-Gruppen aufweisende Verbindung enthält. Solche Zubereitungen werden auch als Zweikomponenten- oder 2K-Dispersionen bezeichnet. Hierbei findet eine Reaktion zwischen dem Polymer und der NCO-Gruppen aufweisenden Verbindung statt, wodurch im getrockneten Zustand ein ausgehärteter Polymerfilm erhalten werden kann. Die NCO-Gruppen aufweisende Verbindung kann beispielsweise ein gegebenenfalls hydrophiliertes Diisocyanat, Triisocyanat oder ein mindestens difunktionelles, NCO-terminiertes Prepolymer sein. Es ist auch möglich, dass die Zubereitung eine wässrige Zubereitung einer NCO-Gruppen enthaltenden Verbindung ist, wobei diese Zubereitung keine OH-Gruppen enthaltenden Polymere enthält. Solch eine Zubereitung kann auch als eine wässrige Zubereitung eines hydrophilierten Isocyanats bezeichnet werden, wobei im Unterschied zu einer 2K-Polyurethan-Dispersion die Polymerkomponente zur Reaktion mit den NCO-Gruppen fehlt. Beim Einsatz einer solchen Zubereitung ist vorgesehen, dass das hydrophilierte Isocyanat mit Reaktionspartnern auf der Oberfläche des Aufbaumaterials reagiert. Solche Zubereitungen finden unter anderem Verwendung als Vernetzerkomponenten für wasserverdünnbare Zweikomponenten-Polyurethanlacke (2K-PUR-Lacke). Beispiele hierfür sind nichtionische, mit Hilfe von Polyethern hydrophil-modifizierte Polyisocyanate. Neben den rein nichtionisch hydrophilierten, Polyetherurethane enthaltenden Polyisocyanaten sind auch Polyether-modifizierte wasserdispergierbare Polyisocyanate bekannt, die zur Verbesserung der Emulgierbarkeit oder zur Erzielung spezieller Effekte zusätzlich noch ionische Gruppen, beispielsweise Sulfonatgruppen oder Amino- beziehungsweise Ammoniumgruppen aufweisen.

Die Zubereitung kann weitere Additive enthalten. Insbesondere kann es sich um silikonhaltige, oberflächenaktive Additive handeln.

Der Einsatz der genannten Zubereitungen oder deren Kombinationen vermeidet die Probleme, die mit organischen Lösungsmitteln assoziiert werden. Bei dem aus der Zubereitung stammenden Material und dem Material des Gegenstands handelt es sich jeweils um Polyurethane oder Isocyanate, so dass eine gute Kompatibilität erwartet werden kann. Dann ist auch die Haftung der Beschichtung besser als bei chemisch weniger verwandten Materialien.

Ein auf dem Gegenstand haftender Polyurethanfilm verbessert das haptische Empfinden, das der Gegenstand auslöst, nicht nur indem Unebenheiten der Gegenstandsoberfläche geglättet werden. Lose auf der Oberfläche haftende Partikel, wie sie insbesondere nach Pulversinterverfahren noch vorliegen können, werden in die Filmschicht eingebunden und somit fixiert. Gerade diejenigen Hilfsstoffe, welche in zur Sinterung vorgesehenen Pulvern zur Verbesserung der Fließ- und Absorptionseigenschaften eingesetzt werden wie $TiO_2$, Ruß oder $SiO_2$ werden fixiert. Dadurch lassen sich Schwierigkeiten vermeiden, die mit ihren Einsatz in Verbindung stehen. Beispiele hierfür sind ein Stauben oder Kreiden der Oberfläche sowie mögliche Hautreizungen durch lose Partikel. Es lassen sich samtige, nicht kreidende Oberflächen für den Gegenstand erhalten. Eventuell vorliegende Poren im Gegenstand werden wenigstens teilweise auch verfüllt.

Ohne auf eine Theorie beschränkt zu sein wird ferner angenommen, dass ein auf dem Gegenstand haftender Polyurethanfilm auch wenigstens einen Teil der auf den Gegenstand einwirkenden mechanischen Kräfte, insbesondere Zugkräfte aufnehmen kann und dadurch zu einer erhöhten Festigkeit des Gegenstands beitragen kann. Es kann der Gegenstand in den von der Polyurethan-Dispersion kontaktierten Bereichen nach Trocknung der Dispersion eine Steigerung der Zähigkeit und/oder der Härte, beispielsweise um $\geq 2$ oder $\geq 5$ Shore A-Härtegrade und/oder eine Steigerung des E-Moduls um > 5%, bevorzugt > 10%, erfahren. Ebenso kann die Abriebsfestigkeit dieser Bereiche erhöht werden.

Durch das erfindungsgemäße Verfahren lässt sich ferner in den von der Zubereitung kontaktierten Bereichen nach Trocknung der Dispersion eine Erhöhung der Dichte des verarbeiteten Aufbaumaterials von beispielsweise $\geq 5\%$ oder $\geq 10\%$ erreichen.

In einer bevorzugten Ausführungsform ist die wässrige Polyurethan-Dispersion anionisch und/oder nichtionisch hyrophiliert. Bevorzugt sind die wässrigen Polyurethan-Dispersionen anionisch mittels Sulfonatgruppen und/oder Carboxylatgruppen hydrophiliert. Besonders bevorzugt sind zur anionischen Hydrophilierung ausschließlich Sulfonatgruppen enthalten.

In einer weiteren bevorzugten Ausführungsform ist die wässrige Polyurethan-Dispersion erhältlich, indem

A) isocyanatfunktionelle Prepolymere aus

A1) organischen Polyisocyanaten

A2) polymeren Polyolen mit zahlenmittleren Molekulargewichten von 400 bis 8000 g/mol, vorzugsweise von 400 bis 6000 g/mol und besonders bevorzugt von 600 bis 3000 g/mol, und OH-Funktionalitäten von 1,5 bis 6, bevorzugt von 1,8 bis 3, besonders bevorzugt von 1,9 bis 2,1, und

A3) gegebenenfalls hydroxyfunktionellen Verbindungen mit Molekulargewichten von 62 bis 399 g/mol sowie

A4) gegebenenfalls isocyanatreaktiven, anionischen oder potentiell anionischen und/oder gegebenenfalls nichtionischen Hydrophilierungsmitteln,

gegebenenfalls in Gegenwart von Urethanisierungskatalysatoren, sowie gegebenenfalls weiteren Hilfs- und Zusatzstoffe, hergestellt werden und

B) deren freie NCO-Gruppen dann ganz oder teilweise

B1) gegebenenfalls mit aminofunktionellen Verbindungen mit Molekulargewichten von 32 bis 400 g/mol und
B2) mit aminofunktionellen, anionischen oder potentiell anionischen Hydrophilierungsmitteln

unter Kettenverlängerung umgesetzt werden und die Prepolymere vor, während oder nach Schritt B) in Wasser dispergiert werden.

Isocyanatreaktive Gruppen sind beispielsweise primäre und sekundäre Aminogruppen, Hydroxygruppen oder Thiolgruppen.

Weiter bevorzugt weisen diese Polyurethan-Dispersionen weniger als 5 Gew.- %, besonders bevorzugt weniger als 0,2 Gew.- %, bezogen auf die gesamte Dispersionen, an ungebundenen organischen Aminen oder an Ammoniak auf.

Falls gewünscht, kann das Prepolymer A) vor, während oder nach der Dispergierung durch Beimischung einer Base ganz oder teilweise in die anionische Form überführt werden.

Um eine anionische Hydrophilierung zu erreichen müssen in A4) und/oder B2) Hydrophilierungsmittel eingesetzt werden, die wenigstens eine gegenüber NCO-Gruppen reaktive Gruppe wie Amino-, Hydroxy- oder Thiolgruppen aufweisen und darüber hinaus -COO⁻, -SO$_3$⁻oder -PO$_3$⁻ als anionische bzw. deren ganz oder teilweise protonierte Säureformen als potentiell anionische Gruppen aufweisen.

Bevorzugt werden in A4) und/oder B2) solche Verbindungen zur anionischen oder potentiell anionischen Hydrophilierung eingesetzt, die als anionische oder potentiell anionische Funktionalität ausschließlich Sulfonsäure- bzw. Sulfonatgruppen (-SO$_3$H bzw. -SO$_3$M, mit M = Alkali- oder Erdalkalimetall) aufweisen.

Geeignete Polyisocyanate der Komponente A1) sind die dem Fachmann an sich bekannten aliphatischen, aromatischen oder cycloaliphatischen Polyisocyanate einer NCO-Funktionalität von größer oder gleich 2.

Beispiele solcher geeigneten Polyisocyanate sind 1,4-Butylendiisocyanat, 1,5-Pentamethylendiisocyanat, 1,6-Hexamethylendiisocyanat (HDI), Isophorondiisocyanat (IPDI), 2,2,4- und/oder 2,4,4-Trimethylhexamethylendiisoeyanat, die isomeren Bis-(4,4'-isocyanatocyclohexyl)methane oder deren Mischungen beliebigen Isomerengehalts, 1,4-Cyclohexylendiisocyanat, 4-Isocyanatomethyl-1,8-octandiisocyanat (Nonantriisocyanat), 1,4-Phenylendiisocyanat, 2,4- und/oder 2,6-Toluylendiisocyanat, 1,5-Naphthylendiisoeyanat, 2,2' - und/oder 2,4'- und/oder 4,4'-Diphenylmethandiisocyanat, 1,3- und/oder 1,4-Bis-(2- isocyanato-prop-2-yl)-benzol (TMXDI), 1 ,3-Bis(isocyanato-methyl)benzol (XDI) sowie Alkyl-2,6-diisocyanatohexanoate (Lysindiisocyanate) mit C$_1$-C$_8$-Alkylgruppen.

Neben den vorstehend genannten Polyisocyanaten können auch modifizierte Diisocyanate die eine Funktionalität ≥ 2 aufweisen, mit Uretdion-, Isocyanurat-, Urethan-, Allophanat-, Biuret-, Iminooxadiazindion- oder Oxadiazintrionstruktur sowie Mischungen aus diesen auch anteilig eingesetzt werden.

Bevorzugt handelt es sich um Polyisocyanate oder Polyisocyanatgemische der vorstehend genannten Art mit ausschließlich aliphatisch oder cycloaliphatisch gebundenen Isocyanatgruppen oder Mischungen aus diesen und einer mittleren NCO-Funktionalität der Mischung von 2 bis 4, bevorzugt von 2 bis 2,6 und besonders bevorzugt von 2 bis 2,4.

Durch den Einsatz von bevorzugt aliphatischen Isocyanaten können die imprägnierten 3D gedruckten Polyurethane zusätzlich gegen Verwitterung und Vergilbung geschützt werden.

Besonders bevorzugt werden in A1) Pentamethylendiisocyanat, Hexamethylendiisocyanat, Isophorondiisocyanat oder die isomeren Bis-(4,4'-isocyanatocyclohexyl)methane sowie Mischungen der vorgenannten Diisocyanate eingesetzt.

In A2) werden polymere Polyole mit einem zahlenmittleren Molekulargewicht Mn von 400 bis 8000 g/mol, bevorzugt von 400 bis 6000 g/mol und besonders bevorzugt von 600 bis 3000 g/mol eingesetzt. Diese weisen bevorzugt eine OH-Funktionalität von 1,5 bis 6, besonders bevorzugt von 1,8 bis 3, ganz besonders bevorzugt von 1,9 bis 2,1 auf.

Solche polymeren Polyole sind die in der Polyurethanlacktechnologie an sich bekannten Polyesterpolyole, Polyacrylatpolyole, Polyurethanpolyole, Polycarbonatpolyole, Polyetherpolyole, Polyesterpolyacrylatpolyole, Polyurethanpolyacrylatpolyole, Polyurethanpolyesterpolyole, Polyurethanpolyetherpolyole, Polyurethanpolycarbonatpolyole und Polyesterpolycarbonatpolyole. Diese können in A2) einzeln oder in beliebigen Mischungen untereinander eingesetzt werden.

In einer besonderen Ausführungsform können diese erhältlichen Polyurethane auch ungesättigte Doppelbindungen enthalten, die einer nachträglichen radikalischen Vernetzungsreaktion zugänglich sind. Bevorzugt sind zu deren Aufbau monohydroxyfunktionelle, (Meth)acrylatgruppen-haltige Alkohole. Bei solchen monohydroxyfunktionellen, (Meth)acrylatgruppen-haltigen Alkoholen handelt es sich beispielsweise um 2-Hydroxyethyl(meth)acrylat, Caprolactonverlängerten Modifikationen von 2-Hydroxyethyl(meth)acrylat, 2-Hydroxypropyl-(meth)acrylat, 4 Hydroxybutyl(meth)acrylat, 3-Hydroxy-2,2-dimethylpropyl(meth)-acrylat, die im Mittel monohydroxyfunktionellen Di-, Tri oder Penta(meth)acrylate mehrwertiger Alkohole wie Trimethylolpropan, Glycerin, Pentaerythrit, Ditrimethylolpropan, Dipentaerythrit, ethoxyliertes, propoxyliertes oder alkoxyliertes Trimethylolpropan, Glycerin, Pentaerythrit, Ditrimethylolpropan, Dipentaerythrit oder deren technische Gemische.

Geeignete Polyesterpolyole sind auch die an sich bekannten Polykondensate aus Di- sowie gegebenenfalls Tri- und Tetraolen und Di- sowie gegebenenfalls Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester, wobei Hexandiol(1,6) und Isomere, Butandiol(1,4), Neopentylglykol und Hydroxypivalinsäureneopentylglykolester bevorzugt sind. Daneben können auch Polyole wie Trimethylolpropan, Glycerin, Erythrit, Pentaerythrit, Trimethylolbenzol oder Trishydroxyethylisocyanurat eingesetzt werden. Als Dicarbonsäuren können Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure und/oder 2,2-Dimethylbernsteinsäure eingesetzt werden. Als Säurequelle können auch die entsprechenden Anhydride verwendet werden.

Sofern die mittlere Funktionalität des zu veresternden Polyols größer als 2 ist, können zusätzlich auch Monocarbonsäuren wie Benzoesäure und Hexancarbonsäure mit verwendet werden.

Bevorzugte Säuren sind aliphatische oder aromatische Säuren der vorstehend genannten Art. Besonders bevorzugt sind Adipinsäure, Isophthalsäure und Phthalsäure. Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind Caprolacton, Butyrolacton und Homologe. Bevorzugt ist Caprolacton.

Ebenfalls können in A2) Hydroxylgruppen-aufweisende Polycarbonate, bevorzugt Polycarbonatdiole, mit zahlenmittleren Molekulargewichten Mn von 400 bis 8000 g/mol, bevorzugt von 600 bis 3000 g/mol eingesetzt werden. Diese sind durch Reaktion von Kohlensäurederivaten, wie Diphenylcarbonat, Dimethylcarbonat oder Phosgen, mit Polyolen, bevorzugt Diolen, erhältlich.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Bevorzugt enthält die Diolkomponente 40 bis 100 Gew.-% Hexandiol, wobei insbesondere 1,6-Hexandiol und/oder Hexandiolderivate bevorzugt sind. Solche Hexandiolderivate basieren auf Hexandiol und weisen neben endständigen OH-Gruppen Ester- oder Ethergruppen auf. Solche Derivate sind durch Reaktion von Hexandiol mit überschüssigem Caprolacton oder durch Veretherung von Hexandiol mit sich selbst zum Di- oder Trihexylenglykol erhältlich.

Statt oder zusätzlich zu reinen Polycarbonatdiolen können auch Polyether-Polycarbonatdiole in A2) eingesetzt werden.

Hydroxylgruppen aufweisende Polycarbonate sind bevorzugt linear gebaut. Ebenfalls können in A2) Polyetherpolyole eingesetzt werden. Geeignet sind beispielsweise die in der Polyurethanchemie an sich bekannten Polytetramethylenglykolpolyether wie sie durch Polymerisation von Tetrahydrofuran mittels kationischer Ringöffnung erhältlich sind.

Ebenfalls geeignete Polyetherpolyole sind die an sich bekannten Additionsprodukte von Styroloxid, Ethylenoxid, Propylenoxid, Butylenoxid und/oder Epichlorhydrin an di- oder polyfunktionelle Startermoleküle. Polyetherpolyole, basierend auf der zumindest anteiligen Addition von Ethylenoxid an di- oder polyfunktionelle Startermoleküle, können auch als Komponente A4) eingesetzt werden (nichtionische Hydrophilierungsmittel).

Als geeignete Startermoleküle können alle dem Stand der Technik nach bekannten Verbindungen eingesetzt werden, wie zum Beispiel Wasser, Butyldiglykol, Glycerin, Diethylenglykol, Trimethyolpropan, Propylenglykol, Sorbit, Ethylendiamin, Triethanolamin, 1,4-Butandiol.

Bevorzugte Komponenten in A2) sind Polytetramethylenglykolpolyether und Polycarbonat-Polyole bzw. deren Mischungen und besonders bevorzugt sind Polytetramethylenglykolpolyether.

In A3) können Polyole des genannten Molekulargewichtsbereichs mit bis zu 20 Kohlenstoffatomen, wie Ethylenglykol, Diethylenglykol, Triethylenglykol, 1,2-Propandiol, 1,3-Propandiol, 1,4- Butandiol, 1,3-Butylenglykol, Cyclohexandiol, 1,4-Cyclohexandimethanol, 1,6-Hexandiol, Neopentylglykol, Hydrochinondihydroxyethylether, Bisphenol A (2,2-Bis(4-hydroxyphenyl)propan), hydriertes Bisphenol A (2,2-Bis(4-hydroxycyclohexyl)propan), Trimethylolpropan, Trimethylolethan, Glycerin, Pentaerythrit sowie deren beliebige Mischungen untereinander eingesetzt werden. Geeignet sind auch Esterdiole des genannten Molekulargewichtsbereichs wie $\alpha$-Hydroxybutyl-$\epsilon$- hydroxy-capronsäureester, $\omega$-Hydroxyhexyl-y-hydroxybuttersäure-ester, Adipinsäure-($\beta$-hydroxyethyl)ester oder Terephthalsäurebis($\beta$-hydroxyethyl)-ester.

Ferner können in A3) auch monofunktionelle isocyanatreaktive Hydroxyl-gruppenhaltige Verbindungen eingesetzt werden. Beispiele solcher monofunktionellen Verbindungen sind Ethanol, n-Butanol, Ethylenglykolmonobutylether, Diethylenglykolmonomethylether, Diethylenglykolmonobutylether, Propylenglykolmonomethylether, Dipropylenglykolmonomethylether, Tripropylenglykolmonomethylether, Dipropylenglykolmonopropylether, Propylenglykolmonobutylether, Dipropylenglykolmonobutylether, Tripropylenglykolmonobutylether, 2-Ethylhexanol, 1-Octanol, 1-Dodecanol, 1-Hexadecanol.

Geeignete ionisch oder potentiell ionisch hydrophilierende Verbindungen entsprechend der Definition der Komponente A4) sind z.B. Mono- und Dihydroxycarbonsäuren, Mono- und Dihydroxysulfonsäuren, sowie Mono- und Dihydroxyphosphonsäuren und ihre Salze wie Dimethylolpropionsäure, Dimethylolbuttersäure, Hydroxypivalinsäure, Äpfelsäure, Zitronensäure, Glykolsäure, Milchsäure, das propoxylierte Addukt aus 2-Butendiol und $NaHSO_3$, z.B. beschrieben in der DE-A 2 446 440 (Seite 5-9, Formel I-III).

Geeignete nichtionisch hydrophilierende Verbindungen der Komponente A4) sind z.B. Polyoxyalkylenether, die mindestens eine Hydroxy-, Amino- oder Thiolgruppe enthalten. Beispiele sind die monohydroxyfunktionellen, im statistischen Mittel 5 bis 70, bevorzugt 7 bis 55 Ethylenoxideinheiten pro Molekül aufweisenden Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4. Auflage, Band 19, Verlag Chemie, Weinheim S. 31-38). Diese sind entweder reine Polyethylenoxidether oder gemischte Polyalkylenoxidether, wobei sie mindestens 30 mol-%, bevorzugt mindestens 40 mol-% bezogen auf alle enthaltenen Alkylenoxideinheiten an Ethylenoxideinheiten enthalten.

Besonders bevorzugte nichtionische Verbindungen sind monofunktionelle gemischte Polyalkylenoxidpolyether, die 40 bis 100 mol-%> Ethylenoxid- und 0 bis 60 mol-%> Propylenoxideinheiten aufweisen.

Geeignete Startermoleküle für solche nichtionischen Hydrophilierungsmittel sind gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykolmonoalkylether, wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole der vorstehend genannten Art. Besonders bevorzugt werden Diethylenglykolmonobutylether oder n-Butanol als Startermoleküle verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Als Komponente B1) können organische Di- oder Polyamine wie beispielsweise 1,2-Ethylendiamin, 1,2- und 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methylpentamethylendiamin, Diethylentriamin, 4,4-Diaminodicyclohexylmethan, Hydrazinhydrat, und/oder Dimethylethylendiamin eingesetzt werden.

Darüber hinaus können als Komponente B1) auch Verbindungen, die neben einer primären Aminogruppe auch sekundäre Aminogruppen oder neben einer Aminogruppe (primär oder sekundär) auch OH-Gruppen aufweisen, eingesetzt werden. Beispiele hierfür sind primäre/sekundäre Amine, wie Diethanolamin, 3-Amino-l-methylaminopropan, 3-Amino-l-ethylaminopropan, 3-Amino-lcyclohexylaminopropan, 3-Amino-lmethylaminobutan, Alkanolamine wie N-Aminoethylethanolamin, Ethanolamin, 3-Aminopropanol, Neopentanolamin.

Ferner können als Komponente B1) auch monofunktionelle isocyanatreaktive Aminverbindungen eingesetzt werden, wie beispielsweise Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, bzw. geeignete substituierte Derivate davon, Amidamine aus diprimären Aminen und Monocarbonsäuren, Monoketim von diprimären Aminen, primär/tertiäre Amine, wie N,N-Dimethylaminopropylamin.

Bevorzugt werden 1,2-Ethylendiamin, Bis(4-aminocyclohexyl)methan, 1,4-Diaminobutan, Isophorondiamin, Ethanolamin, Diethanolamin und Diethylentriamin eingesetzt.

Geeignete anionisch hydrophilierende Verbindungen der Komponente B2) sind Alkalimetallsalze der Mono- und Diaminosulfonsäuren. Beispiele solcher anionischen Hydrophilierungsmittel sind Salze der 2-(2-Aminoethylamino)ethansulfonsäure, Ethylendiaminpropyl- oder -butylsulfonsäure, 1,2- oder 1,3-Propylendiamin-β-ethylsulfonsäure oder Taurin. Weiterhin kann das Salz der Cyclohexylaminopropansulfonsäure (CAPS) aus WO-A 01/88006 als anionisches Hydrophilierungsmittel verwendet werden.

Besonders bevorzugte anionische Hydrophilierungsmittel B2) sind solche, die Sulfonatgruppen als ionische Gruppen und zwei Aminogruppen enthalten, wie die Salze der 2-(2-Aminoethylamino)ethylsulfonsäure und 1,3-Propylendiamin-β-ethylsulfonsäure. Zur Hydrophilierung können auch Mischungen aus anionischen und nichtionischen Hydrophilierungsmitteln verwendet werden.

In einer bevorzugten Ausführungsform zur Herstellung der wässrigen Polyurethan-Dispersionen werden die Komponenten A1) bis A4) und B1) bis B2) in den folgenden Mengen eingesetzt, wobei sich die Einzelmengen stets zu 100 Gew.-% addieren:

5 bis 40 Gew.-% Komponente A1),

55 bis 90 Gew.-% A2),

0,5 bis 20 Gew.-% Summe der Komponenten A3) und B1)

0,1 bis 25 Gew.-% Summe der Komponenten A4) und B2), wobei bezogen auf die Gesamtmengen der Komponenten A1) bis A4) und B1) bis B2) 0,1 bis 5 Gew.-% an anionischen bzw. potentiell anionischen Hydrophilierungsmitteln aus A4) und/oder B2) verwendet werden.

In einer besonders bevorzugten Ausführungsform zur Herstellung der wässrigen Polyurethan-Dispersionen werden die Komponenten A1) bis A4) und B1) bis B2) in den folgenden Mengen eingesetzt, wobei sich die Einzelmengen stets zu 100 Gew.-% aufaddieren:

5 bis 35 Gew.-% Komponente A1),

60 bis 90 Gew.-% A2),

0,5 bis 15 Gew.-% Summe der Komponenten A3) und B 1 )

0,1 bis 15 Gew.-% Summe der Komponenten Komponente A4) und B2), wobei bezogen auf die Gesamtmengen der Komponenten A1) bis A4) und B1) bis B2) 0,2 bis 4 Gew.-% an anionischen bzw. potentiell anionischen Hydrophilierungsmitteln aus A4) und/oder B2) verwendet werden.

In einer ganz besonders bevorzugten Ausführungsform zur Herstellung der wässrigen Polyurethan-Dispersionen werden die Komponenten A1) bis A4) und B1) bis B2) in den folgenden Mengen eingesetzt, wobei sich die Einzelmengen stets zu 100 Gew.-% aufaddieren:

10 bis 30 Gew.-% Komponente A1),

65 bis 85 Gew.-% A2),

0,5 bis 14 Gew.-% Summe der Komponenten A3) und B1)

0,1 bis 13,5 Gew.-% Summe der Komponenten A4) und B2), wobei bezogen auf die Gesamtmengen der Komponenten A1) bis A4) und B 1 ) bis B2) 0,5 bis 3,0 Gew.-% an anionischen bzw. potentiell anionischen Hydrophilierungsmitteln aus A4) und/oder B2) verwendet werden.

Die Herstellung der Polyurethan-Dispersionen kann in einer oder mehreren Stufe/-n in homogener oder bei mehrstufiger Umsetzung, teilweise in disperser Phase durchgeführt werden. Nach vollständig oder teilweise durchgeführter Polyaddition aus A1) bis A4) erfolgt ein Dispergier-, Emulgier- oder Lösungsschritt. Im Anschluss erfolgt gegebenenfalls eine weitere Polyaddition oder Modifikation in disperser Phase.

Dabei können alle aus dem Stand der Technik bekannten Verfahren wie z.B. Prepolymer-Mischverfahren, Acetonverfahren oder Schmelzdispergierverfahren verwendet werden. Bevorzugt wird nach dem Aceton-Verfahren verfahren.

Für die Herstellung nach dem Aceton-Verfahren werden üblicherweise die Bestandteile A2) bis A4) und die Polyisocyanatkomponente A1) zur Herstellung eines isocyanatfunktionellen Polyurethan-Prepolymers ganz oder teilweise vorgelegt und gegebenenfalls mit einem mit Wasser mischbaren aber gegenüber Isocyanatgruppen inerten Lösungsmittel verdünnt und auf Temperaturen im Bereich von 50 bis 120°C aufgeheizt. Zur Beschleunigung der Isocyanataddditionsreaktion können die in der Polyurethan-Chemie bekannten Katalysatoren eingesetzt werden. Geeignete Lösungsmittel sind die üblichen aliphatischen, ketofunktionellen Lösungsmittel wie Aceton, 2-Butanon, die nicht nur zu Beginn der Herstellung, sondern gegebenenfalls in Teilen auch später zugegeben werden können. Bevorzugt sind Aceton und 2-Butanon, besonders bevorzugt ist Aceton. Auch die Zugabe anderer Lösungsmittel ohne isocyanatreaktive Gruppen ist möglich, jedoch nicht bevorzugt. Anschließend werden die gegebenenfalls zu Beginn der Reaktion noch nicht zugegebenen Bestandteile von A1) bis A4) zudosiert.

Bei der Herstellung des Polyurethan-Prepolymeren aus A1) bis A4) beträgt das Stoffmengenverhältnis von Isocyanat-Gruppen zu isocyanatreaktiven Gruppen im allgemeinen 1,05 bis 3,5, bevorzugt 1,1 bis 3,0, besonders bevorzugt 1,1 bis 2,5. Die Umsetzung der Komponenten A1) bis A4) zum Prepolymer erfolgt teilweise oder vollständig, bevorzugt aber vollständig. Es werden so Polyurethan-Prepolymere, die freie Isocyanatgruppen enthalten, in Substanz oder in Lösung erhalten.

Im Anschluss wird in einem weiteren Verfahrensschritt, falls noch nicht oder nur teilweise geschehen, das erhaltene Prepolymer mit Hilfe von aliphatischen Ketonen wie Aceton oder 2-Butanon gelöst. Die Umsetzung der Komponenten A1) bis A4) zum Prepolymer erfolgt teilweise oder vollständig, bevorzugt aber vollständig. Es werden so Polyurethan-Prepolymere, die freie Isocyanatgruppen enthalten, in Substanz oder in Lösung erhalten.

Im Neutralisationsschritt zur teilweisen oder vollständigen Überführung potentiell anionischer Gruppen in anionische Gruppen werden Basen wie tertiäre Amine, z.B. Trialkylamine mit 1 bis 12, bevorzugt 1 bis 6 C-Atomen in jedem Alkylrest oder Alkalimetallbasen wie die entsprechenden Hydroxide eingesetzt.

Beispiele hierfür sind Trimethylamin, Triethylamin, Methyldiethylamin, Tripropylamin, N-methylmorpholin, Methyldiisopropylamin, Ethyldiisopropylamin und Diisopropylethylamin. Die Alkylreste können beispielsweise auch Hydroxylgruppen tragen, wie bei den Dialkylmonoalkanol-, Alkyldialkanol- und Trialkanolaminen. Als Neutralisationsmittel sind auch anorganische Basen, wie wässrige Natrium-, Lithium bzw. Kaliumhydroxid einsetzbar.

Bevorzugt sind Natriumhydroxyd, Lithiumhydroxyd oder Kaliumhydroxid, besonders bevorzugt sind Natriumhydroxyd, Lithiumhydroxyd oder Kaliumhydroxid. Ganz besonders bevorzugt sind die Natrium-, Lithium- bzw. Kaliumionen bereits als Kation an anionisch funktionalisierte Bausteine gebunden.

Die Stoffmenge der Basen beträgt im Allgemeinen 50 und 125 mol-%, bevorzugt zwischen 70 und 100 mol-% der Stoffmenge der zu neutralisierenden Säuregruppen. Die Neutralisation kann auch gleichzeitig mit der Dispergierung erfolgen, in dem das Dispergierwasser bereits das Neutralisationsmittel enthält.

Bei der Kettenverlängerung in Stufe B) werden $NH_2$- und/oder NH-funktionelle Komponenten mit den noch verbliebenen Isocyanatgruppen des Prepolymers umgesetzt. Bevorzugt wird die Kettenverlängerung/-terminierung vor der Dispergierung in Wasser durchgeführt.

Geeignete Komponenten zur Kettenverlängerung sind organische Di- oder Polyamine B1) wie beispielsweise Ethylendiamin, 1,2- und 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methylpentamethylendiamin, Diethylentriamin, Diaminodicyclohexylmethan und/oder Dimethylethylendiamin.

Darüber hinaus können auch Verbindungen B1), die neben einer primären Aminogruppe auch sekundäre Aminogruppen oder neben einer Aminogruppe (primär oder sekundär) auch OH-Gruppen aufweisen, eingesetzt werden. Beispiele hierfür sind primäre/sekundäre Amine, wie Diethanolamin, 3-Amino-l-methylaminopropan, 3-Amino-l-ethylaminopropan, 3-Amino-lcyclohexylaminopropan, 3-Amino-1-methylaminobutan, Alkanolamine wie N-Aminoethylethanolamin, Ethanolarnin, 3-Aminopropanol, Neopentanolamin zur Kettenverlängerung bzw. -terminierung eingesetzt werden.

Zur Kettenterminierung werden üblicherweise Amine B1) mit einer gegenüber Isocyanaten reaktiven Gruppe wie Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, bzw. geeignete substituierte Derivate davon, Amidamine aus diprimären Aminen und Monocarbonsäuren, Monoketim von diprimären Aminen, primär/tertiäre Amine, wie N,N-Dimethylaminopropylamin verwendet. Werden zur Kettenverlängerung anionische Hydrophilierungsmittel entsprechend der Definition B2) mit $NH_2$- oder NH-Gruppen eingesetzt, erfolgt die Kettenverlängerung der Prepolymere bevorzugt vor der Dispergierung.

Der Kettenverlängerungsgrad, also das Äquivalentverhältnis von NCO-reaktiven Gruppen der zur Kettenverlängerung und Kettenterminierung eingesetzten Verbindungen zu freien NCO-Gruppen des Prepolymers, liegt im allgemeinen zwischen 40 und 150 %, bevorzugt zwischen 50 und 120 %, besonders bevorzugt zwischen 60 und 120 %.

Die aminischen Komponenten B1) und B2) können gegebenenfalls in verdünnter Form im erfindungsgemäßen Verfahren einzeln oder in Mischungen eingesetzt werden, wobei grundsätzlich jede Reihenfolge der Zugabe möglich ist. Wenn Wasser als Verdünnungsmittel mit verwendet werden, so beträgt der Verdünnungsmittelgehalt in der in B) eingesetzten Komponente zur Kettenverlängerung bevorzugt 40 bis 95 Gew.- %.

Die Dispergierung erfolgt bevorzugt im Anschluss an die Kettenverlängerung. Dazu wird das gelöste und kettenverlängerte Polyurethanpolymer gegebenenfalls unter starker Scherung, wie z.B. starkem Rühren, entweder in das Dispergierwasser eingetragen oder es wird umgekehrt das Dispergierwasser zu den kettenverlängerte Polyurethanpolymerlösungen gerührt. Bevorzugt wird das Wasser in das gelöste kettenverlängerte Polyurethanpolymer gegeben.

Das in den Dispersionen nach dem Dispergierschritt noch enthaltene Lösemittel wird üblicherweise anschließend destillativ entfernt. Eine Entfernung bereits während der Dispergierung ist ebenfalls möglich. Der Restgehalt an organischen Lösemitteln in den Polyurethan-Dispersionen beträgt typischerweise weniger als 2 Gew.- %, bevorzugt weniger als 1 Gew.- %, bezogen auf die gesamte Dispersion.

Der pH-Wert der Polyurethan-Dispersionen beträgt typischerweise weniger als 8,0, bevorzugt weniger als 7,5 und liegt besonders bevorzugt zwischen 5,5 und 7,5. Typischerweise enthalten die Polyurethan-Dispersionen mindestens 10 Gew.-% Polyurethan, bezogen auf den Feststoffanteil aller in der Dispersion enthaltenen filmbildenden Polymere. Bevorzugt sind jedoch mindestens 50 Gew.-%, weiter bevorzugt mindestens 90 Gew.-%, besonders bevorzugt mindestens 95 Gew.-% und insbesondere bevorzugt 100 Gew.-% Polyurethan als filmbildendes Polymer enthalten.

Wird nicht ausschließlich Polyurethan als filmbildendes Polymer eingesetzt, so können weiterhin andere Polymer-Dispersionen mit eingesetzt werden, z.B. auf Basis von Polyestern, Poly(meth)acrylaten, Polyepoxiden, Polyvinylacetaten, Polyethylen, Polystyrol, Polybutadienen, Polyvinylchlorid und/oder entsprechenden Copolymerisaten. Die Polyurethan-Dispersionen können neben den Polymer-Dispersionen zusätzlich auch Hilfs- und Zusatzstoffe enthalten. Beispiele für solche Hilfs- und Zusatzstoffe sind Vernetzer, Verdicker, Thixotropiermittel, Stabilisatoren, Antioxidantien, Lichtschutzmittel, Emulgatoren, Tenside, Weichmacher, Pigmente, Füllstoffe und Verlaufshilfsmittel.

In einer weiteren bevorzugten Ausführungsform beträgt die mittels Laserkorrelations-Spektroskopie bestimmte zahlenmittlere Teilchengröße der Teilchen in der wässrigen Polyurethan-Dispersion weniger als 1000 nm, bevorzugt weniger als 500 nm. Solche Teilchengrößen können eine gute Sedimentationsstabilität der Dispersionen bewirken.

In einer weiteren bevorzugten Ausführungsform weist die wässrige Polyurethan-Dispersion Feststoffgehalte von 10 bis 70 Gew.-%, besonders bevorzugt von 30 bis 70 Gew.- %, ganz besonders bevorzugt von 30 bis 65 Gew.-% bezogen auf das darin enthaltene Polyurethan auf.

In einer weiteren bevorzugten Ausführungsform umfasst die wässrige Dispersion eines OH-Gruppen aufweisenden Polymers, welche weiterhin eine NCO-Gruppen aufweisende Verbindung enthält, die Komponenten:

A) eine oder mehrere Verbindungen mit unvernetzten, polymergebundenen (Meth-)Acrylaten mit einer OH-Zahl von 20 bis 300 mg KOH/g Substanz und/oder

B) gegebenenfalls von A) verschiedene Verbindungen mit mindestens einer gegenüber Isocyanat reaktiven Gruppe und mindestens einer strahlenhärtbaren Doppelbindung,

C) gegebenenfalls eine oder mehrere Verbindungen, die mindestens eine gegenüber Isocyanat reaktiven Gruppe, aber keine strahlenhärtbare Doppelbindungen besitzen,

D) eine oder mehrere Verbindungen mit mindestens einer gegenüber Isocyanat reaktiven Gruppe und zusätzlich nichtionischen, anionischen oder zur Ausbildung von anionischen Gruppen befähigten Gruppen, die für die Polyurethanacrylate dispergierend wirken oder D') eine oder mehrere Verbindungen mit mindestens einer gegenüber Isocyanat reaktiven Gruppe und zusätzlich kationischen oder zur Ausbildung von kationischen Gruppen befähigten Gruppen, die für die Polyurethanacrylate dispergierend wirken,

E) ein oder mehrere organische Verbindungen mit 2 oder mehr Isocyanatgruppen,

F) gegebenenfalls Neutralisationsamine in Kombination mit Verbindungen D) oder F') Neutralisationssäuren F') in Kombination mit Verbindungen D'),

G) gegebenenfalls Urethanisierungskatalysatoren, sowie gegebenenfalls weitere Hilfs- und Zusatzstoffe.

Als Komponente A) geeignet sind die an sich bekannten hydroxylgruppenhaltigen Polyepoxy(meth)acrylate mit einer OH-Zahl im Bereich von 20 bis 300 mg KOH/g, bevorzugt von 100 bis 280 mg KOH/g, besonders bevorzugt von 150 bis 250 mg KOH/g. Bevorzugt werden aromatische, hydroxylgruppenhaltige Polyepoxy(meth)acrylate basierend auf Umsetzungsprodukten von Acrylsäure und/oder Methacrylsäure mit aromatischen Glycidylethern (Epoxiden) verwendet, besonders bevorzugt aromatische Gylcidylether von monomerem, oligomerem oder polymerem Bisphenol-A und/oder Bisphenol-F oder deren alkoxylierten Derivaten. Die unter Komponente A) aufgezählten Verbindungen können für sich alleine oder auch in Mischungen verwendet werden.

Komponente B) beinhaltet von Komponente A) verschiedenen Verbindungen mit mindestens einer gegenüber Isocyanat reaktive Gruppe und mindestens einer strahlenhärtbaren Doppelbindung.

Komponente B) enthält bevorzugt monohydroxyfunktionelle, (Meth)acrylatgruppen-haltige Alkohole. Bei solchen monohydroxyfunktionellen, (Meth)acrylatgruppen-haltigen Alkoholen handelt es sich beispielsweise um 2-Hydroxyethyl(meth)acrylat, Caprolacton-verlängerten Modifikationen von 2-Hydroxyethyl(meth)acrylat, 2-Hydroxypropyl-(meth)acrylat, 4 Hydroxybutyl(meth)acrylat, 3-Hydroxy-2,2-dimethylpropyl(meth)-acrylat, die im Mittel monohydroxyfunktionellen Di-, Tri oder Penta(meth)acrylate mehrwertiger Alkohole wie Trimethylolpropan, Glycerin, Pentaerythrit, Ditrimethylolpropan, Dipentaerythrit, ethoxyliertes, propoxyliertes oder alkoxyliertes Trimethylolpropan, Glycerin, Pentaerythrit, Ditrimethylolpropan, Dipentaerythrit oder deren technische Gemische.

Besonders bevorzugt als monohydroxyfunktionelle, (Meth)acrylatgruppen-haltige Alkohole sind 2-Hydroxyethyl(meth)acrylat, 2-Hydroxypropyl(meth)acrylat, Pentaerythrittriacrylat, Dipentaerythrit-pentaacrylat und das Additionsprodukt aus Ethylmethylheptansäureglycidylester mit (Meth)acrylsäure sowie deren technische Gemische. Ganz besonders bevorzugt ist 2-Hydroxyethyl(meth)acrylat.

Außerdem können in Komponente B) auch Alkohole, die sich aus der Umsetzung von doppelbindungshaltigen Säuren mit gegebenenfalls doppelbindungshaltigen, monomeren Epoxidverbindungen erhalten lassen, als monohydroxyfunktionelle, (Meth)acrylatgruppen-haltige Alkohole eingesetzt werden.

Ferner kann die Komponente B) Hydroxylgruppen und ungesättigte Gruppen enthaltende Oligomere und Polymere enthalten. Bevorzugt sind Polyester(meth)acrylate.

Von den Polyester(meth)acrylaten werden als Komponente B) bevorzugt die hydroxylgruppenhaltigen Polyester(meth)acrylate mit einer OH-Zahl im Bereich von 15 bis 300 mg KOH/g Substanz, insbesondere bevorzugt von 60 bis 200 mg KOH/g Substanz eingesetzt.

Bevorzugt werden diese Polyester(meth)acrylate durch Umsetzung von b1) mehrfunktionellen Alkoholen von 62 bis 320 g/mol mit b2) Dicarbonsäuren sowie b3) Acrylsäure, Methacrylsäure und / oder dimerer Acrylsäure.

Besonders bevorzugt für b1) sind di-, tri- und tetrafunktionelle Alkohole wie Butandiol, Pentandiol, 1,6-Hexandiol, Neopentylglykol, Cyclohexandiol, 1,4-Cyclohexan-dimethanol, Diethylenglykol, Triethylenglykol, Tetraethylenglykol, Dipropylenglykol, Tripropylenglykol, Glycerin, Trimethylolpropan und Pentaerythrit. Sowie das Umsetzungsprodukt von 1 mol Trimethylolpropan mit 4 mol Ethylenoxid.

Besonders bevorzugt für b2) sind Dicarbonsäuren mit einem Molekulargewicht im Bereich von 104 bis 600 g/mol und / oder deren Anhydride, wie z.B. Phthalsäure, Phthalsäureanhydrid, Isophthalsäure, Tetrahydrophthalsäure, Tetrahydrophthalsäureanhydrid, Hexahydrophthalsäure, Hexahydrophthalsäureanhydrid, Cyclohexandicarbonsäure, Maleinsäureanhydrid, Fumarsäure, Malonsäure, Bernsteinsäure, Bernsteinsäureanhydrid, Glutarsäure, Adipinsäure, Pimelinsäure, Korksäure, Sebacinsäure, Dodecandisäure. Ganz besonders bevorzugte Dicarbonsäuren sind aliphatische Dicarbonsäuren mit 4-8 C-Atomen, insbesondere Adipinsäure.

Besonders bevorzugt für b3) sind Acrylsäure und Methacrylsäure oder deren Gemische, insbesondere bevorzugt ist Acrylsäure.

Die als Komponente B) verwendbar beschriebenen monohydroxyfunktionellen, (Meth)acrylatgruppen-haltigen Alkohole sowie Hydroxylgruppen und ungesättigte Gruppen enthaltende Oligomere und Polymere können für sich alleine als auch als Mischungen verwendet werden.

Als Komponente C) können bevorzugt difunktionelle Amine, di- oder trifunktionelle Alkohole und hydroxyfunktionelle Polyesteralkohole eingesetzt werden. Dabei finden neben den unter b1) beschriebenen Alkoholen und ohne Verwendung von b3) durch Umsetzung aus b1) und b2) hergestellten Polyestern zur Erhöhung des Gewichtsmittel des Molekulargewichts Mw der Polyurethanacrylate auch in geringen Mengen (bevorzugt < 5 Gew.-%, besonders bevorzugt < 3,5 Gew.-%) Diamine Anwendung.

Ein Vorteil von UV-härtbaren Polyurethan-Dispersionen als radikalisch vernetzbare Infusionsmittel in Gegenwart eines UV- oder thermischen Radikalstarters (als Teil der Infusionsformulierung), der beim forcierten Trocknen/Belichten der Infusion/Beschichtung ist, dass die Dispersion radikalisch bei einer Temperatur unterhalb der Erweichungstemperatur des 3D-gedruckten Gegenstands nachgehärtet werden kann. Einschränkungen, wie sie durch eine Topfzeit in 2K-Formulierungen auftreten können, werden vermieden.

Besonders bevorzugt werden in Komponente C) als mehrfunktionelle Alkohole Neopentylglykol, 1,4-Butandiol, 1,4-Cyclohexan-dimethanol, 1,6-Hexandiol, 2-Ethyl-1,3-hexandiol, und/oder Trimethylolpropan eingesetzt. Als hydroxyfunktionelle Polyesteralkohole werden in Komponente C) bevorzugt Umsetzungsprodukte aus Phthalsäure, Phthalsäureanhydrid, Isophthalsäure und/oder aliphatischen Dicarbonsäuren mit 4-8 C-Atomen, insbesondere Adipinsäure, sowie 1,6-Hexandiol, 2-Ethyl-1,3-hexandiol, Butandiol, Ethylenglykol, Di- oder Triethylenglykol und/oder Neopentylglykol eingesetzt. Bei der Herstellung von hydroxyfunktionellen Polyestern kann es von besonderem Vorteil sein, Rizinusöl als hydroxyfunktionellen Baustein zu verwenden.

Als Amine werden in Komponente C) besonders bevorzugt aliphatische Diamine, insbesondere bevorzugt Ethylendiamin, 1,6-Hexamethylendiamin und/oder Isophorondiamin eingesetzt Die unter Komponente C) aufgezählten Verbindungen können für sich alleine oder auch in Mischungen verwendet werden.

Als Komponente D) finden eine oder mehrere Verbindungen mit mindestens einer gegenüber Isocyanat reaktiven Gruppe und zusätzlich nichtionischen, anionischen oder zur Ausbildung von anionischen Gruppen befähigten Gruppen, die für die Polyurethanacrylate dispergierend wirken, Anwendung.

Zu den hydrophilierend wirkenden Gruppen gehören anionische Gruppen d1) und/oder solche, die aus potentiell anionischen Gruppen d2) hervorgehenden (beispielsweise durch Salzbildung) ionischen Gruppen d1), wie beispielsweise Sulfonium-, Phosphonium-, Carboxylat-, Sulfonat- und/oder Phosphonat-Gruppen. Bevorzugt geeignete isocyanatreaktive Gruppen sind Hydroxyl-und Aminogruppen.

Verbindungen enthaltend potentiell anionische Gruppen d2) umfassen Verbindungen wie beispielsweise Mono- und Dihydroxycarbonsäuren, Mono- und Diaminocarbonsäuren, Mono- und Dihydroxysulfonsäuren, Mono- und Diaminosulfonsäuren, Mono- und Dihydroxyphosphonsäuren sowie Mono- und Diaminophosphonsäuren.

Bevorzugte Verbindungen enthaltend potentiell anionischen Gruppen d2) sind ausgewählt aus der Gruppe bestehend aus Dimethylolpropionsäure, Dimethylolbuttersäure, Hydroxypivalinsäure, N-(2-Aminoethyl)-alanin, 2-(2-Amino-ethylamino)-ethansulfonsäure, Ethylen-diamin-propyl- oder - butylsulfonsäure, 1,2- oder 1,3-Propylendiamin-ethylsulfonsäure, 3-(Cyclohexylamino)-propan-1-sulfonsäure, Äpfelsäure, Zitronensäure, Glykolsäure, Milchsäure, Glycin, Alanin, Taurin, Lysin, 3,5-Diaminobenzoesäure sowie ein Additionsprodukt von Isophorondiamin (1-Amino-3,3,5-trimethyl-5-aminomethylcyclohexan, IPDA) und Acrylsäure ( EP-A 916 647 , Beispiel 1).

Besonders bevorzugt enthält Komponente D) als Verbindungen mit potentiell anionischen Gruppen Hydroxypivalinsäure und/oder Dimethylolpropionsäure, insbesondere bevorzugt Dimethylolpropionsäure.

Ebenfalls gehören zur Komponente D) nichtionische Verbindungen, die für Polyurethanacrylate dispergierend wirken.

Nichtionische hydrophile Verbindungen d3) sind beispielsweise einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4. Auflage, Band 19, Verlag Chemie, Weinheim S. 31-38). Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol. Diethylenglykol-monoalkylether wie beispielsweise Diethylenglykolmonobutylether; ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol sind ebenfalls geeignet.

Bevorzugte Startermoleküle sind gesättigte Monoalkohole sowie Diethylenglykol-monoalkylether. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-% bevorzugt zu mindestens 40 mol-% aus Ethylenoxideinheiten bestehen. Bevorzugte nichtionische hydrophile Verbindungen A4) sind monofunktionelle gemischte Polyalkylenoxidpolyether, die mindestens 40 mol-% Ethylenoxid- und maximal 60 mol-% Propylenoxideinheiten aufweisen.

Die unter Komponente D) aufgeführten Verbindungen können auch in Mischungen verwendet werden.

In Komponente D') können bevorzugt Verbindungen mit potentiell kationischen Gruppen wie beispielsweise, Triethanolamin, N-Methyl-diethanolamin und N,N-Dimethylethanolamin Anwendung finden. Selbstverständlich können auch Verbindungen kationischer Natur wie beispielsweise Verbindungen mit Ammonium-Gruppen, die über weitere, mit Isocyanatgruppen reaktive Komponenten aufweisen, verwendet werden. Besonders bevorzugt wird N-Methyl-diethanolamin verwendet.

Die ionische Hydrophilierung und die Kombination von ionischer und nicht-ionischer Hydrophilierung sind gegenüber der rein nicht-ionischen Hydrophilierung bevorzugt.

Die Komponente E) enthält Polyisocyanate ausgewählt aus der Gruppe von aromatischen, araliphatischen, aliphatischen oder cycloaliphatischen Polyisocyanaten oder Mischungen solcher Polyisocyanate mit mindestens 2 Isocyanatgruppen pro Molekül. Geeignete Polyisocyanate sind beispielsweise 1,3-Cyclohexandi-isocyanat, 1-Methyl-2,4-diisocyanato-cyclohexan, 1-Methyl-2,6-diisocyanato-cyclohexan, Tetramethylendiisocyanat, 4,4'-Diisocyanatodiphenylmethan, 2,4'-Diisocyanato-diphenylmethan, 2,4-Diisocyanatotoluol, 2,6-Diisocyanatotoluol, $\alpha,\alpha,\alpha',\alpha'$,-Tetramethyl-m- oder p-Xylylendiisocyanat, 1,6-Hexamethylendiisocyanat, l-Isocyanato-3,3,5-trimethyl-5-isocyanatomethylcyclohexan (Isophorondiisocyanat oder IPDI), 4,4'-Diisocyanato-dicyclohexylmethan, 1,3-Bis(isocyanato-methyl)benzol (XDI), 1,3-Bis(1-isocyanato-1-methylethyl)-benzol (TMXDI), 4-Isocyanatomethyl-1,8-octan-diisocyanat (Triisocyanatononan, TIN) ( EP-A 928 799 ), Homologe bzw. Oligomere dieser aufgezählten Polyisocyanate mit Biuret-, Carbodiimid , Isocyanurat-, Allophanat-, Iminooxadiazindion- und / oder Uretdiongruppen, und deren Mischungen.

Bevorzugt sind aliphatische und cycloaliphatische Isocyanate. Besonders bevorzugt sind 1,6-Hexamethylendiisocyanat, 1-Isocyanato-3,3,5-trimethyl-5-isocyanato-methylcyclohexan (Isophorondiisocyanat oder IPDI) und 4,4'-Diisocyanato-dicyclohexylmethan sowie Homologe bzw. Oligomere von Hexamethylendiisocyanat, 1-Isocyanato-3,3,5-trimethyl-5-isocyanatomethylcyclohexan (Isophorondiisocyanat oder IPDI) und 4,4'-Diisocyanato-dicyclohexylmethan mit Biuret-, Carbodiimid-, Isocyanurat-, Allophanat-, Imino-oxadiazindion- und/oder Uretdiongruppen und deren Mischungen.

Die unter Komponente E) aufgezählten Verbindungen können für sich alleine oder auch in Mischungen verwendet werden.

Die unter Komponente D) genannten Säuren werden gegebenenfalls bei durch Umsetzung mit Neutralisationsaminen (Komponente F), typischerweise, aber nicht ausschließlich tertiäre Amine, bevorzugt Triethylamin, Ethyldiisopropylamin, Dimethylcyclohexylamin, Dimethylethanolamin, Methyldiethanolamin, Triethanolamin, Diethanolamin, N-Butyldiethanolamin, Ammoniak und / oder N-Ethylmorpholin in die entsprechenden Salze überführt. Der Neutralisationsgrad liegt dabei bevorzugt zwischen 50 und 125%.

Die unter Komponente D') genannten Basen werden durch Umsetzung mit Neutralisationsmitteln F'), wie z. B. anorganische Säuren, wie beispielsweise Salzsäure, Phosphorsäure und/oder Schwefelsäure, und/oder bevorzugt organischen Säuren, wie beispielsweise Ameisensäure, Essigsäure, Milchsäure, Methan-, Ethan- und/oder p-Toluolsulfonsäure, in die entsprechenden Salze überführt. Besonders bevorzugt werden Essigsäure, Milchsäure und Phosphorsäure verwendet. Insbesondere bevorzugt ist Milchsäure. Der Neutralisationsgrad liegt dabei bevorzugt zwischen 50 und 125 %.

Als Verbindungen der Komponente G) können gegebenenfalls ein oder mehrere Katalysatoren eingesetzt werden. Dabei handelt es sich um Katalysatoren zur Beschleunigung der Urethanbildung. Bekannte Katalysatoren hierfür sind beispielsweise Zinnoctoat, Zinndioctoat, Zinkdioctoat, Dibutylzinndilaurat, Dimethylbis[(1-oxoneodecyl)oxy]stannan, Dimethylzinndicarboxylat, Zirkonium-bis(ethyl-hexanoat), Zirconium-acteylacetonat oder tertiäre Aminen wie beispielsweise 1,4-Diazabi-cyclo[2.2.2]octan, Diazabicyclononan, Diazabicycloundecan, 1,1,3,3-Tetramethylguanidin, 1,3,4,6,7,8-Hexahydro-1-methyl-2H-pyrimido(1,2-a)pyrimidin.

Bevorzugt sind Dibutylzinndilaurat, Zinndioctoat, Dimethylbis[(1-oxoneodecyl)oxy]stannan, Dimethylzinndicarboxylat.

In einer besonderen Ausführungsform, werden ausschließlich zinnfreie geeignete Katalysatoren zum Beispiel auf Bismut- oder Zirkonium-Basis eingesetzt.

Selbstverständlich können gegebenenfalls weitere Zusatzstoffe eingesetzt werden. Dabei kann es sich beispielsweise um im Bereich der Lacktechnologie gängige Zusatzstoffe wie Lösemittel, Weichmacher, Verlaufsmittel, Entschäumungsmittel, Stabilisatoren oder Haftvermittler handeln. Als Verlaufsmittel können oberflächenaktive Verbindungen wie z.B. Polydimethylsiloxane verwendet werden. Es kann auch von Vorteil sein, gleichzeitig mehrere Zusatzstoffe eines Typs zu verwenden. Selbstverständlich kann es ebenfalls von Vorteil sein, mehrere Zusatzstoffe mehrerer Typen zu verwenden.

Komponente A) und gegebenenfalls Komponenten B) und (ii) werden dabei in solchen Mengen eingesetzt, dass der Gehalt an strahlenhärtbaren Doppelbindungen zwischen 0,5 und 6,0, bevorzugt zwischen 1,0 und 5,0, besonders bevorzugt zwischen 1,4 und 3,0 mol/kg nicht wässriger Bestandteile der Dispersion beträgt.

Optional enthält die vorgenannte Polyurethandispersion eine weitere Komponente, wobei es sich um Reaktivverdünner, die mindestens eine radikalisch polymerisierbare Gruppe aufweisen und allenfalls zum Teil über optional vorhandene, einbaufähige OH-Gruppen an das Polyurethanacrylat gebunden ist, ansonsten bevorzugt als ungebundenes Monomer vorliegt, handelt.

In einer bevorzugten Ausführungsform ist als strahlenhärtbarer Bestandteil nur Komponente A) (Polyepoxyacrylate) vorhanden. Die Komponente A) wird insbesondere dann vorzugsweise aus aromatischen oder aliphatischen Polyepoxy(meth)acrylaten, Polyester(meth)acrylaten, Polyepoxy(meth)acrylaten, mono- oder dihydroxyfunktionellen (Meth)acrylatgruppen-haltigen Verbindungen oder Mischungen von diesen ausgewählt, bevorzugt aus Polyepoxy(meth)acrylaten, insbesondere bevorzugt aus aromatischen Polyepoxy(meth)acrylaten.

"(Meth)acrylat" bezieht sich im Rahmen dieser Schrift auf entsprechende Acrylat- oder Methacrylatfunktionen oder auf eine Mischung beider.

In bevorzugter Ausgestaltung beträgt der Anteil nicht polymergebundener strahlenhärtbarer Verbindungen < 30 Gew.-% bezogen auf den Feststoffanteil des erzeugten Polyurethanacrylats, besonders bevorzugt < 20 Gew.-%, ganz besonders bevorzugt < 10 Gew.% wobei die nicht polymergebundenen strahlenhärtbaren Verbindungen insbesondere als Acrylate mit zwei oder mehr C-C Doppelbindungen vorliegen.

Es ist weiter bevorzugt, dass der Anteil Isocyanatgruppen-haltiger Verbindungen > 10 Gew.-% bezogen auf den Feststoffanteil des erzeugten Polyurethanacrylats beträgt, besonders bevorzugt > 20 Gew.-%.

Bevorzugt ist es ebenfalls, wenn für die Herstellung der Dispersion folgende Kombination von Merkmalen gewählt wird:
Polymergebundene strahlenhärtbare Gruppen, besonders bevorzugt, Polyurethan(meth)acrylate, Polyester(meth)acrylate, Polyepoxy(meth)acrylaten, Polyether(meth)acrylaten, insbesondere bevorzugt Polyepoxy(meth)acrylaten und/ oder

Polymergebundene strahlenhärtbare Gruppen, durch Umsetzung von einer oder mehrerer Verbindungen mono- oder dihydroxyfunktioneller, (Meth)acrylatgruppen-haltiger Alkohole mit Verbindungen mit mindestens einer gegenüber Isocyanat reaktiven Gruppe, besonders bevorzugt sind aliphatische Verbindungen und
hoher Anteil an Verbindungen der Komponente E), bevorzugt > 10%, besonders bevorzugt > 20% als Summe aller NCO-haltigen Einsatzstoffe.

In einer weiteren bevorzugten Ausführungsform ist in der wässrigen Zubereitung der NCO-Gruppen enthaltende Verbindung ohne OH-Gruppen aufweisende Polymere in der Zubereitung die NCO-Gruppen enthaltende Verbindung eine Verbindung auf Basis aliphatischer, cycloaliphatischer, araliphatischer und/oder aromatischer Diisocyanate mit:

a) einer mittleren Isocyanatfunktionalität von mindestens 2,0

b) einem Gehalt an Isocyanatgruppen (berechnet als NCO; Molekulargewicht = 42) von 5,0 bis 25,0 Gew.-% und

EP 3 545 025 B1

c) einer anionisch und/oder nichtionisch hydrophilierenden Komponente, vorzugsweise eine Komponente mit einem Gehalt an innerhalb von Polyetherketten gebundenen Ethylenoxideinheiten (berechnet als $C_2H_4O$; Molekulargewicht = 44) von 2 bis 50 Gew.-%, wobei die Polyetherketten im statistischen Mittel 5 bis 35 Ethylenoxideinheiten enthalten.

Vorzugsweise sind weiterhin die Polyetherketten zu mindestens 60 mol-% über Allophanatgruppen mit jeweils zwei, jeweils aus mindestens zwei Diisocyanaten aufgebauten Polyisocyanatmolekülen verknüpft.

Details zu solchen wasserdispergierbaren Polyisocyanaten und deren Herstellung finden sich in dem europäischen Patent EP 0 959 087 B1, auf das in vollem Umfang Bezug genommen wird. Die Herstellung der wasserdispergierbaren Polyisocyanate kann erfolgen, indem man:

A) eine Polyisocyanatkomponente einer (mittleren) NCO-Funktionalität von 2,0 bis 5,0, mit einem Gehalt an aliphatisch, cycloaliphatisch, araliphatisch und/oder aromatisch gebundenen Isocyanatgruppen (berechnet als NCO; Molekulargewicht = 42) von 8,0 bis 27,0 Gew.-% und einem Gehalt an monomeren Diisocyanaten von weniger als 1 Gew.-% mit

B) einem einwertigen, im statistischen Mittel von 5 bis 35 Ethylenoxideinheiten aufweisenden Polyalkylenoxidpolyetheralkohol unter Einhaltung eines NCO/OHNCO/OH-Äquivalentverhältnisses von 6 : 1 bis 400 : 1

so miteinander umsetzt, dass mindestens 60 % der durch NCO/OH-Reaktion primär gebildeten Urethangruppen zu Allophanatgruppen weiterreagieren, wobei die Mengenverhältnisse der genannten Ausgangsverbindungen so gewählt werden, dass die resultierenden Umsetzungsprodukte den oben unter a) bis c) genannten Bedingungen entsprechen.

Diese in der Herstellung der wasserdispergierbaren Polyisocyanaten einzusetzende Komponente A) weist eine (mittlere) NCO-Funktionalität von 2,0 bis 5,0, vorzugsweise von 2,3 bis 4,5, einen Gehalt an Isocyanatgruppen von 8,0 bis 27,0 Gew.-%, vorzugsweise 14,0 bis 24,0 Gew.-% und einen Gehalt an monomeren Diisocyanaten von weniger als 1 Gew.-%, vorzugsweise weniger als 0,5 Gew.-% auf. Sie umfasst mindestens ein organisches Polyisocyanat mit aliphatisch, cycloaliphatisch, araliphatisch und/oder aromatisch gebundenen Isocyanatgruppen.

Es handelt sich bei den Polyisocyanaten bzw. Polyisocyanatgemischen der Komponente A) um beliebige, durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Allophanat-, Biuret-, Iminooxadiazindion- und/oder Oxadiazintrionstruktur.

Geeignete Diisocyanate zur Herstellung solcher Polyisocyanate sind beliebige durch Phosgenierung oder nach phosgenfreien Verfahren, beispielsweise durch thermische Urethanspaltung, zugängliche Diisocyanate des Molekulargewichtsbereiches 140 bis 400 mit aliphatisch, cycloaliphatisch, araliphatisch und/oder aromatisch gebundenen Isocyanatgruppen, wie z. B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und ,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanatomethylcyclohexan, Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan, 1,5-Diisocyanatonaphthalin oder beliebige Gemische solcher Diisocyanate.

Bevorzugt handelt es sich bei den Ausgangskomponenten A) um Polyisocyanate oder Polyisocyanatgemische der genannten Art mit ausschließlich aliphatisch und/oder cycloaliphatisch gebundenen Isocyanatgruppen. Ganz besonders bevorzugte Ausgangskomponenten A) sind Polyisocyanate bzw. Polyisocyanatgemische mit Isocyanuratstruktur auf Basis von HDI, IPDI und/oder 4,4'-Diisocyanatodicyclohexylmethan.

Bei dieser Komponente B) handelt es sich um einwertige, im statistischen Mittel 5 bis 35, vorzugsweise 7 bis 30 Ethylenoxideinheiten pro Molekül aufweisende Polyalkylenoxidpolyetheralkohole, wie sie in an sich bekannter Weise durch Alkoxylierung geeigneter Startermoleküle zugänglich sind oder beliebige Gemische solcher Polyetheralkohole.

Als geeignete Startermoleküle zur Herstellung dieser eingesetzten Polyetheralkohole B) seien hier beispielhaft genannt: gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol; ungesättigte Alkohole wie Allylalkohol, 1,1-Dimethyl-allylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Dibutylamin, Diisobutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol.

Bevorzugte Startermoleküle sind gesättigte Monoalkohole mit bis zu 4 Kohlenstoffatomen. Besonders bevorzugt wird Methanol als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei diesen Polyalkylenoxidpolyetheralkoholen B) handelt es sich entweder um reine Polyethylenoxidpolyether oder gemischte Polyalkylenoxidpolyether, deren Alkylenoxideinheiten zu mindestens 30 mol-%, vorzugsweise zu mindestens 40 mol-% aus Ethylenoxideinheiten bestehen.

Bevorzugte solche Ausgangskomponenten B) sind reine Polyethylenglycolmonomethyletheralkohole, die im statistischen Mittel 7 bis 30, ganz besonders bevorzugt 7 bis 25 Ethylenoxideinheiten aufweisen.

Gegebenenfalls können zusätzlich zu den diesen genannten Polyetheralkoholen B) in untergeordneten Mengen noch weitere gegenüber Isocyanaten reaktive Verbindungen mit anionischen oder kationischen Gruppen, beispielsweise mit Carboxylat-, Sulfonat- oder Ammoniumgruppen, als hydrophile Aufbaukomponente mitverwendet werden.

Zur Durchführung der Synthese werden die Ausgangskomponenten A) und B) bei Temperaturen von 40 bis 180 °C, vorzugsweise 50 bis 150 °C, unter Einhaltung eines NCO-/OH-ÄquivalentVerhältnisses von 6:1 bis 400:1, vorzugsweise von 8:1 bis 140:1, so miteinander umgesetzt, dass mindestens 60 mol-%, vorzugsweise mindestens 80 mol-%, besonders bevorzugt mindestens 90 mol-% der durch NCO/OH-Reaktion primär gebildeten Urethangruppen zu Allophanatgruppen weiterreagieren.

Zur Beschleunigung der Allophanatisierungsreaktion können gegebenenfalls geeignete Katalysatoren mitverwendet werden. Hierbei handelt es sich um die üblichen bekannten Allophanatisierungskatalysatoren, beispielsweise um Metallcarboxylate, Metallchelate oder tertiäre Amine.

Geeignete Allophanatisierungskatalysatoren sind insbesondere Zinkverbindungen, wie z. B. Zink-(II)-stearat, Zink-(II)-n-octanoat, Zink-(II)-2-ethyl-1-hexanoat, Zink-(II)-naphthenat oder Zink-(II)-acetylacetonat, Zinnverbindungen, wie z. B. Zinn-(II)-n-octanoat, Zinn-(II)-2-ethyl-1-hexanoat, Zinn-(II)-laurat, Dibutylzinnoxid, Dibutylzinndichlorid, Dibutylzinndiacetat, Dibutylzinndilaurat, Dibutylzinndimaleat oder Dioctylzinndiacetat, Aluminium-tri(ethylaceto-acetat), Eisen-(III)-chlorid, Kaliumoctoat, Mangan- Cobalt- oder Nickelverbindungen sowie starke Säuren, wie z.B. Trifluoressigsäure, Schwefelsäure, Chlorwasserstoff, Bromwasserstoff, Phosphorsäure oder Perchlorsäure, oder beliebige Gemische dieser Katalysatoren.

Der Verlauf der Umsetzung kann bei dieser Synthese durch z. B. titrimetrische Bestimmung des NCO-Gehaltes verfolgt werden. Nach Erreichen des angestrebten NCO-Gehaltes, vorzugsweise wenn das molare Verhältnis von Allophanatgruppen zu Urethangruppen im Reaktionsgemisch mindestens 4 : 1, besonders bevorzugt mindestens 9 : 1, beträgt, wird die Reaktion abgebrochen. Dies kann bei rein thermischer Reaktionsführung beispielsweise durch Abkühlen des Reaktionsgemisches auf Raumtemperatur erfolgen. Bei der bevorzugten Mitverwendung eines Allophanatisierungskatalysators der genannten Art wird die Umsetzung im allgemeinen aber durch Zugabe geeigneter Katalysatorgifte, beispielsweise Säurechloride wie Benzoylchlorid oder Isophthaloyldichlorid, abgestoppt.

Im Übrigen werden bei dieser Synthese die Mengenverhältnisse der Ausgangskomponenten im Rahmen der gemachten Angaben so gewählt, dass die resultierenden Polyisocyanatgemische den oben unter a) bis c) gemachten Angaben entsprechen, wobei a) die mittlere NCO-Funktionalität vorzugsweise 2,3 bis 9,9, besonders bevorzugt 2,8 bis 5,8, b) der NCO-Gehalt vorzugsweise 6,0 bis 22,5 Gew.-%, besonders bevorzugt 8,5 bis 21,5 Gew.-% und c) der Gehalt an innerhalb von Polyetherketten gebundenen Ethylenoxideinheiten vorzugsweise 5 bis 40 Gew.-%, besonders bevorzugt 7 bis 25 Gew.-% beträgt.

Die gemachten Angaben bezüglich der NCO-Funktionalität der aus der Synthese erhaltenen Verfahrensprodukte beziehen sich dabei auf den Wert, der sich rechnerisch aus Art und Funktionalität der Ausgangskomponenten nach der Formel

$$F = \frac{\Sigma \text{ val NCO} - \Sigma(1 + x) \cdot \text{mol OH}}{\Sigma\left(\dfrac{\text{val NCO}}{f_{NCO}}\right) + \Sigma \text{ mol OH} - \Sigma(1 + x) \cdot \text{mol OH}}$$

bestimmen lässt, in welcher x den Anteil der beim erfindungsgemäßen Verfahren zu Allophanatgruppen umgesetzten Urethangruppen bedeutet. Die Funktionalität $f_{NCO}$ der Ausgangspolyisocyanate A) lässt sich aus dem NCO-Gehalt und dem beispielsweise durch Gelpermeationschromatographie (GPC) oder Dampfdruckosmose bestimmten Molekulargewicht errechnen.

In einer weiteren bevorzugten Ausführungsform weisen Abschnitte des Gegenstandes, welche mit der Zubereitung kontaktiert werden, eine Porosität Φ von ≥ 0.01 bis ≤ 0.6 auf. Die Porosität Φ wird ausgedrückt als:

$$\Phi = 1 - (\rho / \rho_0)$$

wobei ρ die Dichte des Volumens bezeichnet, welches den Abschnitten des Gegenstands zugeordnet ist, welche mit der Zubereitung kontaktiert werden und $\rho_0$ die Reindichte des Aufbaumaterials bezeichnet. Vorzugsweise beträgt die Porosität $\Phi \geq 0.1$ bis $\leq 0.5$ und mehr bevorzugt $\geq 0.2$ bis $\leq 0.4$. Bei solch porösen Volumina kann die wässrige Zubereitung auch in größerem Umfang in das Innere des Volumens eindringen und auch dort zur Verbesserung der Dichte und der mechanischen Eigenschaften des Gegenstands führen. In Pulversinterverfahren kann durch eine bewusst niedrigere Leistung des zum Sintern verwendeten Lasers die Porosität des 3D-gedruckten Gegenstands innerhalb gewisser Grenzen gesteuert werden.

In einer weiteren bevorzugten Ausführungsform umfasst die Herstellung des Gegenstands mittels des additiven Fertigungsverfahrens die Schritte:

- Auftragen einer Schicht aus das Aufbaumaterial aufweisenden Partikeln auf eine Zielfläche;
- Einwirken von Energie auf einen ausgewählten Teil der Schicht, entsprechend einem Querschnitt des Gegenstands, so dass die Partikel im ausgewählten Teil verbunden werden;
- Wiederholen der Schritte des Auftragens und des Einwirkens von Energie für eine Mehrzahl von Schichten, so dass die verbundenen Teile der benachbarten Schichten sich verbinden, um den Gegenstand zu bilden.

Gemäß dieser Ausführungsform handelt es sich um ein Pulversinter- oder Pulverschmelzverfahren. Ist die Anzahl der Wiederholungen für Auftragen und Bestrahlen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau $\geq 2$ bis $\leq 20$ Wiederholungen für Auftragen und Bestrahlen durchgeführt werden.

Es ist bevorzugt, dass mindestens 90 Gewichts-% der Partikel einen Teilchendurchmesser von $\leq 0.25$ mm, bevorzugt $\leq 0.2$ mm, besonders bevorzugt $\leq 0.15$ mm aufweisen. Die Energiequelle zum Verbinden der Teilchen kann elektromagnetische Energie wie zum Beispiel UV- bis IR-Licht sein. Denkbar ist auch ein Elektronenstrahl. Das Verbinden der Partikel im bestrahlten Teil der Partikelschicht erfolgt üblicherweise durch (teilweises) Aufschmelzen eines (teil)kristallinen Materials und Verbinden des Materials beim Abkühlen. Es ist aber auch möglich, dass andere Gestaltumwandlungen der Partikel wie ein Glasübergang, das heißt das Erwärmen des Materials auf eine Temperatur oberhalb der Glasübergangstemperatur, eine Verbindung der Partikel der Partikel untereinander bewirken.

In einer weiteren bevorzugten Ausführungsform umfasst das Einwirken von Energie auf einen ausgewählten Teil der Schicht, entsprechend einem Querschnitt des Gegenstandes, so dass die Partikel im ausgewählten Teil verbunden werden, den folgenden Schritt:

- Bestrahlen eines ausgewählten Teils der Schicht, entsprechend einem Querschnitt des Gegenstandes, mit einem Energiestrahl, so dass die Partikel im ausgewählten Teil verbunden werden.

Diese Verfahrensform kann als selektives Sinterverfahren, insbesondere als selektives Lasersinterverfahren (SLS) angesehen werden. Der Energiestrahl zum Verbinden der Teilchen kann ein Strahl elektromagnetischer Energie wie zum Beispiel ein "Lichtstrahl" von UV- bis IR-Licht sein. Vorzugsweise ist der Energiestrahl ein Laserstrahl, besonders bevorzugt mit einer Wellenlänge zwischen 600 nm und 15 $\mu$m. Der Laser kann als Halbleiterlaser oder als Gaslaser ausgeführt sein. Denkbar ist auch ein Elektronenstrahl.

In einer weiteren bevorzugten Ausführungsform umfasst das Einwirken von Energie auf einen ausgewählten Teil der Schicht, entsprechend einem Querschnitt des Gegenstandes, so dass die Partikel im ausgewählten Teil verbunden werden, die folgenden Schritte:

- Auftragen einer Flüssigkeit auf einen ausgewählten Teil der Schicht, entsprechend einem Querschnitt des Gegenstandes, wobei die Flüssigkeit die Absorption von Energie in den von ihr kontaktierten Bereichen der Schicht relativ zu den nicht von ihr kontaktierten Bereichen erhöht;

- Bestrahlen der Schicht, so dass die Partikel in von der Flüssigkeit kontaktierten Bereichen der Schicht miteinander verbunden werden und die Partikel in nicht von der Flüssigkeit kontaktierten Bereichen der Schicht nicht miteinander verbunden werden.

Bei dieser Ausführungsform kann beispielsweise eine Flüssigkeit enthaltend einen IR-Absorber mittels Inkjet-Verfahren auf die Schicht aufgetragen werden. Das Bestrahlen der Schicht führt zu einer selektiven Erwärmung derjenigen Partikel, welche in Kontakt mit der Flüssigkeit samt IR-Absorber stehen. Auf diese Weise kann ein Verbinden der Partikel erreicht werden. Optional kann zusätzlich eine zweite Flüssigkeit eingesetzt werden, die hinsichtlich des Verhaltens gegenüber der verwendeten Energie komplementär zur Energie absorbierenden Flüssigkeit ist. In Bereichen, in denen die zweite Flüssigkeit aufgetragen wird, wird die eingesetzte Energie nicht absorbiert, sondern reflektiert. Die unter der zweiten Flüssigkeit liegenden Bereiche werden somit abgeschattet. Auf diese Weise kann die Trennschärfe gegenüber aufzuschmelzenden und nicht aufzuschmelzenden Bereichen der Schicht erhöht werden.

In einer weiteren bevorzugten Ausführungsform umfasst die Herstellung des Gegenstands mittels des additiven Fertigungsverfahrens die Schritte:

-    Auftragen eines Filaments eines zumindest teilweise geschmolzenen Aufbaumaterials auf einen Träger, so dass eine Lage des Aufbaumaterials erhalten wird, welche einem ersten ausgewählten Querschnitt des Gegenstands entspricht;

-    Auftragen eines Filaments des zumindest teilweise geschmolzenen Aufbaumaterials auf eine zuvor aufgetragene Lage des Aufbaumaterials, so dass eine weitere Lage des Aufbaumaterials erhalten wird, welche einem weiteren ausgewählten Querschnitt des Gegenstands entspricht und welche mit der zuvor aufgetragenen Lage verbunden ist;

-    Wiederholen des Schritts des Auftragens eines Filaments des zumindest teilweise geschmolzenen Aufbaumaterials auf eine zuvor aufgetragene Lage des Aufbaumaterials, bis der Gegenstand gebildet ist.

Bei dieser Ausführungsform handelt es sich um ein Schmelzschichtungs- oder Fused Deposition Modeling (FDM)-Verfahren. Ist die Anzahl der Wiederholungen für das Auftragen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau $\geq 2$ bis $\leq 20$ Wiederholungen für das Auftragen durchgeführt werden.

Die einzelnen Filamente, welche aufgetragen werden, können einen Durchmesser von $\geq 30\ \mu m$ bis $\leq 2000\ \mu m$ aufweisen, bevorzugt $\geq 40\ \mu m$ bis $\leq 1000\ \mu m$ und besonders bevorzugt $\geq 50\ \mu m$ bis $\leq 500\ \mu m$.

Der erste Schritt dieser Ausführungsform des Verfahrens betrifft den Aufbau der ersten Lage auf einen Träger. Anschließend wird der zweite Schritt so lange ausgeführt, in dem auf zuvor aufgetragene lagen des Aufbaumaterials weiter Lagen aufgetragen werden, bis das gewünschte Endergebnis in Form des Gegenstands erhalten wird. Das zumindest teilweise aufgeschmolzene Aufbaumaterial verbindet sich mit bereits bestehenden Lagen des Materials, um eine Struktur in z-Richtung aufzubauen.

In einer weiteren bevorzugten Ausführungsform umfasst das Aufbaumaterial ein thermoplastisches Polyurethan-Elastomer, welches und einen Schmelzbereich (DSC, Differential Scanning Calorimetry; zweite Aufheizung mit Aufheizrate 5 K/min) von $\geq 20\ °C$ bis $\leq 240\ °C$ (bevorzugt $\geq 40\ °C$ bis $\leq 220\ °C$, mehr bevorzugt $\geq 70\ °C$ bis $\leq 200\ °C$) aufweist, eine Shore-Härte gemäß DIN ISO 7619-1 von $\geq 40$ A bis $\leq 85$ D (bevorzugt $\geq 50$ Shore Abis $\leq 80$ Shore D, mehr bevorzugt $\geq 60$ Shore A bis $\leq 75$ Shore D) aufweist.

Bei dieser DSC-Messung wird das Material folgendem Temperaturzyklus unterworfen: 1 Minute bei minus 60 °C, danach Aufheizen auf 240 °C mit 20 Kelvin/Minute, dann Abkühlen auf minus 60 °C mit 5 Kelvin/Minute, dann 1 Minute bei minus 60 °C, dann Aufheizen auf 240 °C mit 20 Kelvin/Minute.

In einer weiteren bevorzugten Ausführungsform umfasst das Aufbaumaterial ein thermoplastisches Polyurethan-Elastomer, welches

einen Schmelzbereich (DSC, Differential Scanning Calorimetry; zweite Aufheizung mit Aufheizrate 5 K/min) von $\geq 20\ °C$ bis $\leq 240\ °C$ (bevorzugt $\geq 40\ °C$ bis $\leq 220\ °C$, mehr bevorzugt $\geq 70\ °C$ bis $\leq 200\ °C$) aufweist,

eine Shore-Härte gemäß DIN ISO 7619-1 von $\geq 40$ A bis $\leq 85$ D (bevorzugt $\geq 50$ Shore Abis $\leq 80$ Shore D, mehr bevorzugt $\geq 60$ Shore A bis $\leq 75$ Shore D) aufweist,

bei einer Temperatur T eine Schmelzvolumenrate (melt volume rate, MVR) gemäß ISO 1133 (10 kg) von 5 bis 15 (bevorzugt $\geq 6$ bis $\leq 12$, mehr bevorzugt $\geq 7$ bis $\leq 10$) cm$^3$/10 min aufweist und eine Änderung der Schmelzvolumenrate (10 kg) bei einer Erhöhung dieser Temperatur T um 20 °C von $\leq 90$ (bevorzugt $\leq 70$, mehr bevorzugt $\leq 50$) cm$^3$/10 min aufweist.

Auch bei dieser DSC-Messung wird das Material folgendem Temperaturzyklus unterworfen: 1 Minute bei minus 60 °C, danach Aufheizen auf 220 °C mit 20 Kelvin/Minute, dann Abkühlen auf minus 60 °C mit 5 Kelvin/Minute, dann 1 Minute bei minus 60 °C, dann Aufheizen auf 220 °C mit 20 Kelvin/Minute.

Dieses thermoplastische Elastomer, bevorzugt ein thermoplastisches Polyurethanelastomer, weist ein flaches Aufschmelzverhalten auf. Das Aufschmelzverhalten wird über die Änderung des MVR (melt volume rate) gemäß ISO 1133 bei 5 Minuten Vorheizzeit und 10 kg in Abhängigkeit von der Temperatur bestimmt. Als "flach" gilt ein Aufschmelzverhalten dann, wenn der MVR bei einer Ausgangstemperatur $T_x$ einen Ausgangswert von 5 bis 15 cm$^3$/10 min aufweist und durch Temperaturerhöhung um 20 °C auf $T_{x+20}$ um nicht mehr als 90 cm$^3$/10 min steigt.

In einer weiteren bevorzugten Ausführungsform umfasst das Aufbaumaterial ein thermoplastisches Polyurethanelastomer, das erhältlich ist aus der Reaktion der Komponenten:

a) mindestens ein organisches Diisocyanat

b) mindestens eine mit gegenüber Isocyanatgruppen reaktiven Gruppen aufweisenden Verbindung mit einem zahlenmittleren Molekulargewicht ($M_n$) von $\geq$ 500 g/mol bis $\leq$ 6000 g/mol und einer zahlenmittleren Funktionalität der Gesamtheit der Komponenten unter b) von $\geq$ 1,8 bis $\leq$ 2,5

c) mindestens ein Kettenverlängerungsmittel mit einem Molekulargewicht (Mn) von 60 - 450 g/mol und einer zahlenmittleren Funktionalität der Gesamtheit der Kettenverlängerungsmittel unter c) von 1,8 bis 2,5.

Zur Synthese dieses thermoplastischen Polyurethanelastomers (TPU) seien im Einzelnen beispielhaft als Isocyanatkomponente unter a) genannt: aliphatische Diisocyanate wie Ethylendiisocyanat, 1,4-Tetramethylendiisocyant, 1,5-Pentamethylendiisocyanat, 1,6-Hexamethylendiisocyanat, 1,12-Dodecandiisocyanat, cycloaliphatische Diisocyanate wie Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische, außerdem aromatische Diisocyanate, wie 2,4-Toluylendiisocyanat, Gemische aus 2,4-Toluylendiisocyanat und 2,6-Toluylendiisocyanat. 4.4'-Diphenylmethandiisocyanat, 2,4'-Diphenylmethandiisocyanat und 2,2'- Diphenylmethandiisocyanat. Gemische aus 2,4'-Diphenylmethandiisocyanat und 4,4'-Diphenylmethandiisocyanat, urethanmodifizierte flüssige 4,4'-Diphenylmethandiisocyanate oder 2,4'- Diphenylmethandiisocyanate, 4,4'-Diisocyanatodiphenylethan-(1 ,2) und 1,5-Naphthylendiisocyanat. Vorzugsweise verwendet werden 1 ,6-Hexamethylendiisocyanat, 1,4-Cyclohexandiisocyanat, Isophorondiisocyanat, Dicyclohexylmethandiisocyanat, Diphenylmethandiisocyanat-Isomerengemische mit einem 4,4'-Diphenylmethandiisocyanatgehalt von mehr als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Mol-% (berechnet auf Gesamt-Diisocyanat) eines Polyisocyanates verwendet werden, es darf aber höchstens so viel Polyisocyanat zugesetzt werden, dass ein noch thermoplastisch verarbeitbares Produkt entsteht. Beispiele für Polyisocyanate sind Triphenylmethan-4,4',4"-triisocyanat und Polyphenyl-polymethylen-polyisocyanate.

Als längerkettige Isocyanat-reaktive Verbindungen unter b) seien beispielhaft solche mit im Mittel mindestens 1,8 bis 3,0 Zerewitinoff-aktiven Wasserstoffatomen und einem zahlenmittleren Molekulargewicht von 500 bis 10000 g/mol genannt. Eingeschlossen sind neben Aminogruppen Thiolgruppen oder Carboxylgruppen aufweisenden Verbindungen insbesondere zwei bis drei, bevorzugt zwei Hydroxylgruppen aufweisende Verbindungen, speziell solche mit zahlenmittleren Molekulargewichten Mn von 500 bis 6000 g/mol, besonders bevorzugt solche mit einem zahlenmittleren Molekulargewicht Mn von 600 bis 4000 g/mol, z.B. Hydroxylgruppen aufweisende Polyesterpolyole, Polyetherpolyole, Polycarbonatpolyole und Polyesterpolyamide. Geeignete Polyesterdiolen können dadurch hergestellt werden, dass man ein oder mehrere Alkylen Oxide mit 2 bis 4 Kohlenstoffatomen im Alkylen Rest mit einem Startermolekül, das zwei aktive Wasserstoffatome gebunden enthält, umsetzt. Als Alkylen Oxide seien z.B. genannt: Ethylenoxid, 1,2-Propylenoxid, Epichlorhydrin und 1,2-Butylenoxid und 2,3-Butylenoxid. Vorzugsweise Anwendung finden Ethylenoxid, Propylenoxid und Mischungen aus 1,2-Propylenoxid und Ethylenoxid. Die Alkylen Oxide können einzeln, alternierend nacheinander oder als Mischungen verwendet werden. Als Startermoleküle kommen beispielsweise in Betracht Wasser, Aminoalkohole, wie N-Alkyl-diethanolamine, beispielsweise N-Methyl-diethanolamin und Diole wie Ethylenglykol, 1,3- Propylenglykol, 1,4-Butandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyetherdiole eingesetzt werden, jedoch höchstens in solcher Menge, dass ein noch thermoplastisch verarbeitbares Produkt entsteht. Die im Wesentlichen linearen Polyetherdiole besitzen vorzugsweise zahlenmittlere Molekulargewichte n von 500 bis 6000 g/mol. Sie können sowohl einzeln als auch in Form von Mischungen untereinander zur Anwendung kommen. Geeignete Polyesterdiole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterdiole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z:B. Ethylenglykol, Diethylenglykol, 1 ,4-Butandiol, 1,5-Pentandiol, 1 ,6- Hexandiol, 1,10-Decandiol, 2,2-Dimethyl-1,3-propandiol, 1,3-Propandiol oder Dipropylenglykol. Je nach den gewünschten Eigenschaften können die mehrwertigen Alkohole allein oder in Mischung untereinander verwendet werden. Geeignet sind ferner Ester der Kohlensäure mit den genannten Diolen, insbesondere solchen mit 4 bis 6 Kohlenstoffatomen, wie 1 ,4-Butandiol oder 1,6-Hexandiol, Kondensationsprodukte von ω-Hydroxycarbonsäuren wie ω-Hydroxycapronsäure oder Polymerisationsprodukte von Lactonen, z.B. gegebenenfalls substituierten ω-Caprolacton. Als Polyesterdiole vorzugsweise verwendet werden Ethandiolpolyadipate, 1,4-Butandiolpolyadipate, Ethandiol- 1 ,4-Butandiolpolyadipate, 1,6-Hexandiol-neopentylglykolpolyadipate, 1,6-Hexandiol-1,4-butandiolpolyadipate und Polycaprolactone. Die Polyesterdiole besitzen bevorzugt zahlenmittlere Molekulargewichte Mn von 450 bis 6000 g/mol und können einzeln oder in Form von Mischungen untereinander zur Anwendung kommen.

Die Kettenverlängerungsmittel unter c) besitzen im Mittel 1,8 bis 3,0 Zerewitinoff-aktive Wasserstoffatome und haben ein Molekulargewicht von 60 bis 450 g/mol. Hierunter versteht man neben Aminogruppen, Thiolgruppen oder Carboxylgruppen aufweisenden Verbindungen solche mit zwei bis drei, bevorzugt zwei Hydroxylgruppen.

Als Kettenverlängerungsmittel werden vorzugsweise aliphatische Diole mit 2 bis 14 Kohlenstoffatomen eingesetzt, wie z.B. Ethandiol, 1 ,2-Propandiol, 1,3-Propandiol, 1 ,4-Butandiol, 2,3- Butandiol, 1,5-Pentandiol, 1,6-Hexandiol, Diethylenglykol und Dipropylenglykol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1 ,4-Di(b-hydroxyethyl)-hydrochinon, ethoxylierte Bisphenole, z.B. 1,4-Di(b- hydroxyethyl)-bisphenol A, (cyclo)aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4- toluylendiamin oder 3,5-Diethyl-2,6-toluylendiamin oder primäre mono-, di-, tri- oder tetraalkylsubstituierte 4,4'-Diaminodiphenylmethane. Besonders bevorzugt werden als Kettenverlängerer Ethandiol, 1 ,4-Butandiol, 1,6-Hexandiol, 1,4-Di(β-hydroxyethyl)-hydrochinon oder 1,4-Di(β-hydroxyethyl)-bisphenol A verwendet. Es können auch Gemische der oben genannten Kettenverlängerer eingesetzt werden.

Daneben können auch kleinere Mengen an Triolen zugesetzt werden.

Gegenüber Isocyanaten mono funktionelle Verbindungen können unter f) in Anteilen bis zu 2 Gew.-%, bezogen auf TPU, als sogenannte Kettenabbrecher eingesetzt werden. Geeignet sind z.B. Monoamine wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Die gegenüber Isocyanat reaktiven Substanzen sollten bevorzugt so gewählt werden, dass ihre zahlenmittlere Funktionalität zwei nicht wesentlich überschreitet, wenn thermoplastisch verarbeitbare Polyurethanelastomere hergestellt werden sollen. Falls höherfunktionelle Verbindungen eingesetzt werden, sollte durch Verbindungen mit einer Funktionalität <2 die Gesamtfunktionalität entsprechend herabgesetzt werden.

Die relativen Mengen der Isocyanatgruppen und Isocyanat reaktiven Gruppen werden bevorzugt so gewählt, dass das Verhältnis 0,9: 1 bis 1,2:1 beträgt, bevorzugt 0,95:1 bis 1,1:1.

Die erfindungsgemäß verwendeten thermoplastischen Poyurethanelastomere können als Hilfs- und/oder Zusatzstoffe bis zu maximal 50 Gew.-%, bezogen auf die Gesamtmenge an TPU, der üblichen Hilfs- und Zusatzstoffe enthalten. Typische Hilfs- und Zusatzstoffe sind Katalysatoren, Antiblockmittel, Inhibitoren, Pigmente, Farbstoffe, Flammschutzmittel, Stabilisatoren gegen Alterungs- und Witterungseinflüsse, gegen Hydrolyse, Licht, Hitze und Verfärbung, Weichmacher, Gleit- und Entformungsmittel, fungistatisch und bakteriostatisch wirkende Substanzen, Verstärkungsmittel sowie anorganische und/oder organische Füllstoffe und deren Mischungen.

Beispiele für die Zusatzstoffe sind Gleitmittel, wie Fettsäureester, deren Metallseifen, Fettsäureamide, Fettsäureesteramide und Siliconverbindungen, und Verstärkungsmittel, wie z.B. faserartige Verstärkungsstoffe, wie anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff- Additive von R. Gächter u. H. Müller (Hanser Verlag München 1990) oder der DE-A 29 01 774 zu entnehmen.

Geeignete Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den eingesetzten TPU beträgt in der Regel etwa 0 bis 5 Gew.-%, bevorzugt 0 bis 2 Gew.-%, bezogen auf die Gesamtmenge an TPU.

In einer weiteren bevorzugten Ausführungsform umfasst das Aufbaumaterial ein thermoplastisches Polyurethan-Elastomer, welches einen Schmelzbereich (DSC, differential scanning calorimetry; 2. Aufheizung mit Aufheizrate 5 K/min.) von $\geq 20$ °C bis $\leq 100$ °C aufweist und einen Betrag der komplexen Viskosität $|\eta^*|$ (bestimmt durch Viskosi-

metriemessung in der Schmelze mit einem Platte/Platte-Oszillationsscherviskosimeter bei 100 °C und einer Kreisfrequenz von 1/s) von ≥ 10 Pas bis ≤ 1000000 Pas aufweist.

Dieses thermoplastische Elastomer weist einen Schmelzbereich von ≥ 20 °C bis ≤ 100 °C, vorzugsweise von ≥ 25 °C bis ≤ 90 °C und mehr bevorzugt von ≥ 30 °C bis ≤ 80 °C auf. Bei der DSC-Messung zur Bestimmung des Schmelzbereichs wird das Material folgendem Temperaturzyklus unterworfen: 1 Minute bei -60 °C, danach Aufheizen auf 200 °C mit 5 Kelvin/Minute, dann Abkühlen auf -60 °C mit 5 Kelvin/Minute, dann 1 Minute bei -60 °C, dann Aufheizen auf 200 °C mit 5 Kelvin/Minute.

Es ist möglich, dass das Temperaturintervall zwischen Beginn des Schmelzvorgangs und Ende des Schmelzvorgangs, wie es gemäß dem obigen DSC-Protokoll bestimmt werden kann, ≤ 20 °C, bevorzugt ≤ 10 °C und mehr bevorzugt ≤ 5 °C beträgt.

Dieses thermoplastische Elastomer weist ferner einen Betrag der komplexen Viskosität $|\eta^*|$ (bestimmt durch Viskosimetriemessung in der Schmelze mit einem Platte/Platte-Oszillationsviskosimeter gemäß ISO 6721-10:2015-09 bei 100 °C und einer Kreisfrequenz von 1/s) von ≥ 10 Pas bis ≤ 1000000 Pas auf. Vorzugsweise beträgt $|\eta^*|$ ≥ 100 Pas bis ≤ 500000 Pas, mehr bevorzugt ≥ 1000 Pas bis ≤ 200000 Pas.

Der Betrag der komplexen Viskosität $|\eta^*|$ beschreibt das Verhältnis der viskoelastischen Moduln $G'$ (Speichermodul) und G" (Verlustmodul) zur Anregungsfrequenz $\omega$ in einer dynamischmechanischen Materialanalyse:

$$|\eta^*| = \sqrt{\left[\left(\frac{G'}{\omega}\right)^2 + \left(\frac{G''}{\omega}\right)^2\right]} = \frac{|G^*|}{\omega}$$

In einer weiteren bevorzugten Ausführungsform umfasst das Aufbaumaterial ein thermoplastisches Polyurethan-Elastomer, das erhältlich ist aus der Reaktion einer Polyisocyanatkomponente und einer Polyolkomponente, wobei die Polyolkomponente ein Polyesterpolyol umfasst, welches einen Stockpunkt (ASTM D5985) von ≥ 25 °C aufweist.

Gegebenenfalls können bei der Reaktion zu diesem Polyurethan weiterhin Diole des Molekulargewichtsbereichs von ≥ 62 bis ≤ 600 g/mol als Kettenverlängerungsmittel eingesetzt werden.

Diese Polyisocyanatkomponente kann ein symmetrisches Polyisocyanat und/oder ein nichtsymmetrisches Polyisocyanat umfassen. Beispiele für symmetrische Polyisocyanate sind 4,4'-MDI und HDI.

Bei nicht-symmetrischen Polyisocyanaten ist die sterische Umgebung einer NCO-Gruppe im Molekül von der sterischen Umgebung einer weiteren NCO Gruppe verschieden. Es reagiert dann eine Isocyanatgruppe schneller mit gegenüber Isocyanaten reaktiven Gruppen, beispielsweise OH-Gruppen, während die verbleibende Isocyanatgruppe weniger reaktiv ist. Eine Folge des nicht-symmetrischen Aufbaus des Polyisocyanats ist, dass die mit diesen Polyisocyanaten aufgebauten Polyurethane auch eine weniger gerade Struktur aufweisen.

Beispiele geeigneter nicht-symmetrischer Polyisocyanate sind ausgewählt aus der Gruppe umfassend: 2,2,4-Trimethyl-hexamethylendiisocyanat, Ethylethylendiisocyanat, nicht-symmetrische Isomere des Dicyclohexylmethandiisocyanat (H$_{12}$-MDI), nicht-symmetrische Isomere des 1,4-Diisocyanatocyclohexan, nicht-symmetrische Isomere des 1,3-Diisocyanatocyclohexan, nicht-symmetrische Isomere des 1,2-Diisocyanatocyclohexan, nicht-symmetrische Isomere des 1,3-Diisocyanatocyclopentan, nicht-symmetrische Isomere des 1,2-Diisocyanatocyclopentan, nicht-symmetrische Isomere des 1,2-Diisocyanatocyclobutan, 1-Isocyanatomethyl-3-isocyanato-1,5,5-trimethylcyclohexan (Isophorondiisocyanat, IPDI), 1-Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan, Norbonandiisocyanatomethyl, 2,4'-Diphenylmethandiisocyanat (MDI), 2,4- und 2,6-Toluylendiisocyanat (TDI), Derivate der aufgeführten Diisocyanate, insbesondere dimerisierte oder trimerisierte Typen, oder einer Kombination aus mindestens zwei hiervon.

Bevorzugt sind 4,4'-MDI oder eine Mischung enthaltend IPDI und HDI und/oder PDI als Polyisocyanatkomponente.

Diese Polyolkomponente weist ein Polyesterpolyol auf, welches einen Stockpunkt (No Flow Point, ASTM D5985) von ≥ 25 °C, vorzugsweise ≥ 35 °C, mehr bevorzugt ≥ 35 °C bis ≤ 55 °C aufweist. Zur Bestimmung des Stockpunkts wird ein Messgefäß mit der Probe in eine langsame Rotation (0.1 U/min) versetzt. Ein flexibel gelagerter Messkopf taucht in die Probe ein und wird bei Erreichen des Stockpunkts durch die sprunghafte Zunahme der Viskosität aus seiner Lage wegbewegt, die resultierende Kippbewegung löst einen Sensor aus.

Beispiele für Polyesterpolyole, welche solch einen Stockpunkt aufweisen können, sind Reaktionsprodukte von Phthalsäure, Phthalsäureanhydrid oder symmetrischen α,ω-C$_4$- bis C$_{10}$-Dicarbonsäuren mit einem oder mehreren C$_2$- bis C$_{10}$-Diolen. Sie weisen bevorzugt ein zahlenmittleres Molekulargewicht M$_n$ von ≥ 400 g/mol bis ≤ 6000 g/mol auf. Geeignete Diole sind insbesondere Monoethylenglykol, 1,4-Butandiol, 1,6-Hexandiol und Neopentylglykol.

Bevorzugte Polyesterpolyole sind nachfolgend unter Angabe ihrer Säure- und Diolkomponenten angegeben:

Adipinsäure + Monoethylenglykol; Adipinsäure + Monoethylenglykol + 1,4-Butandiol; Adipinsäure + 1,4-Butandiol; Adipinsäure + 1,6-Hexandiol + Neopentylglykol; Adipinsäure + 1,6-Hexandiol; Adipinsäure + 1,4-Butandiol + 1,6-Hexandiol; Phthalsäure(anhydrid) + Monoethylenglykol + Trimethylolpropan; Phthalsäure(anhydrid) + Monoethylenglykol. Bevorzugte Polyurethane werden aus einer Mischung enthaltend IPDI und HDI als Polyisocyanatkomponente und einer Polyolkomponente enthaltend ein zuvor genanntes bevorzugtes Polyesterpolyol erhalten. Besonders bevorzugt ist die Kombination einer Mischung enthaltend IPDI und HDI als Polyisocyanatkomponente mit einem Polyesterpolyol aus Adipinsäure + 1,4-Butandiol + 1,6-Hexandiol zum Aufbau der Polyurethane.

Es ist ferner bevorzugt, dass diese Polyesterpolyole eine OH-Zahl (DIN 53240) von $\geq$ 25 bis $\leq$ 170 mg KOH/g und/oder eine Viskosität (75 °C, DIN 51550) von $\geq$ 50 bis $\leq$ 5000 mPas aufweisen.

Als Beispiel genannt sei ein Polyurethan, das erhältlich ist aus der Reaktion einer Polyisocyanatkomponente und einer Polyolkomponente, wobei die Polyisocyanatkomponente ein HDI und IPDI umfasst und wobei die Polyolkomponente ein Polyesterpolyol umfasst, welches aus der Reaktion einer Reaktionsmischung umfassend Adipinsäure sowie 1,6-Hexandiol und 1,4-Butandiol mit einem Molverhältnis dieser Diole von $\geq$ 1:4 bis $\leq$ 4:1 erhältlich ist und welches ein zahlenmittleres Molekulargewicht $M_n$ (GPC, gegen Polystyrol-Standards) von $\geq$ 4000 g/mol bis $\leq$ 6000 g/mol aufweist. Solch ein Polyurethan kann einen Betrag der komplexen Viskosität $|\eta^*|$ (bestimmt durch Viskosimetriemessung in der Schmelze mit einem Platte/Platte-Oszillationsviskosimeter gemäß ISO 6721-10:2015-09 bei 100 °C und einer Kreisfrequenz von 1/s) von $\geq$ 4000 Pas bis $\leq$ 160000 Pas aufweisen.

Ein weiteres Beispiel für ein geeignetes Polyurethan ist:

1. Weitgehend lineare, endständige Hydroxylgruppen aufweisende Polyesterpolyurethane wie in EP 0192946 A1 beschrieben, hergestellt durch Umsetzung von

a) Polyesterdiolen eines über 600 liegenden Molekulargewichts und gegebenenfalls

b) Diolen des Molekulargewichtsbereichs von 62 bis 600 g/mol als Kettenverlängerungsmittel mit

c) aliphatischen Diisocyanaten

unter Einhaltung eines Äquivalentverhältnisses von Hydroxylgruppen der Komponenten a) und b) zu Isocyanatgruppen der Komponente c) von 1:0,9 bis 1:0,999, wobei die Komponente a) zu mindestens 80 Gew.-% aus Polyesterdiolen des Molekulargewichtsbereichs 4000 bis 6000 auf Basis von (i) Adipinsäure und (ii) Gemischen aus 1,4-Dihydroxybutan und 1,6-Dihydroxyhexan im Molverhältnis der Diole von 4:1 bis 1:4 besteht.

In den unter 1. genannten Polyesterpolyurethanen ist bevorzugt, dass die Komponente a) zu 100 % aus einem Polyesterdiol des Molekulargewichtsbereichs 4000 bis 6000 besteht, bei deren Herstellung als Diolgemisch ein Gemisch aus 1,4-Dihydroxybutan und 1,6-Dihydroxyhexan im Molverhältnis von 7:3 bis 1:2 verwendet worden ist.

In den unter 1. genannten Polyesterpolyurethanen ist ferner bevorzugt, dass die Komponente c) IPDI und weiterhin HDI enthält.

In den unter 1. genannten Polyesterpolyurethanen ist ferner bevorzugt, dass bei ihrer Herstellung als Komponente b) Alkandiole, ausgewählt aus der Gruppe bestehend aus: 1,2-Dihydroxyethan, 1,3-Dihydroxypropan, 1,4-Dihydroxybutan, 1,5-Dihydroxypentan, 1,6-Dihydroxyhexan oder einer Kombination aus mindestens zwei hiervon, in einer Menge von bis zu 200 Hydroxyläquivalentprozent, bezogen auf die Komponente a), mitverwendet worden sind.

Es ist ferner möglich, dass das thermoplastische Elastomer nach Erwärmen auf 100 °C und Abkühlen auf 20 °C bei einer Abkühlrate von 4 °C/min in einem Temperaturintervall von 25 °C bis 40 °C für $\geq$ 1 Minute (bevorzugt $\geq$ 1 Minute bis $\leq$ 30 Minuten, mehr bevorzugt $\geq$ 10 Minuten bis $\leq$ 15 Minuten), ein Speichermodul G' (bestimmt bei der jeweils herrschenden Temperatur mit einem Platte/Platte-Oszillationsviskosimeter gemäß ISO 6721-10:2015-09 bei einer Kreisfrequenz von 1/s) von $\geq$ 100 kPa bis $\leq$ 1 MPa auf und nach Abkühlen auf 20 °C und Lagerung für 20 Minuten ein Speichermodul G' (bestimmt bei 20 °C mit einem Platte/Platte-Oszillationsviskosimeter gemäß ISO 6721-10:2015-09 bei einer Kreisfrequenz von 1/s) von $\geq$ 10 MPa aufweist.

Im erfindungsgemäßen Verfahren bevorzugt ist die Kombination:

- Pulversinterverfahren zur Herstellung des Gegenstands;

- Aufbaumaterial enthaltend Polyurethan, das erhältlich ist aus der Reaktion einer Polyisocyanatkomponente und einer Polyolkomponente, wobei die Polyisocyanatkomponente ein HDI und IPDI umfasst und wobei die Polyolkomponente ein Polyesterpolyol umfasst, welches aus der Reaktion einer Reaktionsmischung umfassend Adipinsäure sowie 1,6-Hexandiol und 1,4-Butandiol mit einem Molverhältnis dieser Diole von $\geq$ 1:4 bis $\leq$ 4:1 erhältlich ist und welches ein zahlenmittleres Molekulargewicht $M_n$ (GPC, gegen Polystyrol-Standards) von $\geq$ 4000 g/mol bis $\leq$ 6000 g/mol aufweist;

- anionische aliphatische Polyesterpolyurethan-Dispersion.

Im erfindungsgemäßen Verfahren ebenfalls bevorzugt ist die Kombination:

- Pulversinterverfahren zur Herstellung des Gegenstands;

- Aufbaumaterial enthaltend Polyurethan, das erhältlich ist aus der Reaktion einer Polyisocyanatkomponente und einer Polyolkomponente, wobei die Polyisocyanatkomponente ein MDI (vorzugsweise 4,4'-MDI) umfasst und wobei die Polyolkomponente ein Polyesterpolyol umfasst, welches aus der Reaktion einer Reaktionsmischung umfassend Adipinsäure sowie 1,6-Hexandiol und 1,4-Butandiol mit einem Molverhältnis dieser Diole von $\geq 1:4$ bis $\leq 4:1$ erhältlich ist und welches ein zahlenmittleres Molekulargewicht $M_n$ (GPC, gegen Polystyrol-Standards) von $\geq 4000$ g/mol bis $\leq 6000$ g/mol aufweist;

- anionische aliphatische Polyesterpolyurethan-Dispersion.

Die vorliegende Erfindung betrifft ferner einen zumindest teilweise beschichteten Gegenstand, erhalten durch ein erfindungsgemäßes Verfahren.

Die Erfindung wird durch die nachfolgenden Beispiele näher erläutert, ohne jedoch darauf beschränkt zu sein.

Beispiele 1 bis 4: Herstellung von Polyurethandispersionen

Die Herstellung von erfindungsgemäß einsetzbaren Polyurethan-Dispersionen wird nachfolgend beschrieben, ohne jedoch darauf beschränkt zu sein. Sofern nicht abweichend gekennzeichnet, beziehen sich alle Prozentangaben auf das Gewicht. Sofern nicht abweichend vermerkt, beziehen alle analytischen Messungen auf Temperaturen von 23°C. Die Bestimmung der Festkörpergehalte erfolgte nach DIN-EN ISO 3251. NCO-Gehalte wurden, wenn nicht ausdrücklich anders erwähnt, volumetrisch gemäß DIN-EN ISO 11909 bestimmt. Die Kontrolle auf freie NCO-Gruppen wurde mittels IR-Spektroskopie (Bande bei 2260 cm$^{-1}$) durchgeführt. Die angegebenen Viskositäten wurden mittels Rotationsviskosimetrie nach DIN 53019 bei 23 °C mit einem Rotationsviskosimeter der Firma Anton Paar Germany GmbH, Ostfildern, DE bestimmt. Die Bestimmung der mittleren Teilchengrößen (angegeben ist das Zahlenmittel) der Polyurethan-Dispersionen erfolgte mittels Laserkorrelations-Spektroskopie (Gerät: Malvern Zetasizer 1000, Malver Inst. Limited).

Verwendete Substanzen und Abkürzungen:

| | |
|---|---|
| Diaminosulfonat: | $NH_2$-$CH_2CH_2$-NH-$CH_2CH_2$-$SO_3$Na (45% in Wasser) |
| Desmophen 2020/C2200: | Polycarbonatpolyol, OH-Zahl 56 mg KOH/g, zahlenmittleres Molekulargewicht 2000 g/mol (Covestro AG, Leverkusen, DE) |
| PolyTHF 2000: | Polytetramethylenglykolpolyol, OH-Zahl 56 mg KOH/g, zahlenmittleres Molekulargewicht 2000 g/mol (BASF AG, Ludwigshafen, DE) |
| PolyTHF 1000: | Polytetramethylenglykolpolyol, OH-Zahl 112 mg KOH/g, zahlenmittleres Molekulargewicht 1000 g/mol (BASF AG, Ludwigshafen, DE) |
| Polyether LB 25: | monofunktioneller Polyether auf Ethylenoxid-/Propylenoxidbasis, zahlenmittleres Molekulargewicht 2250 g/mol, OH-Zahl 25 mg KOH/g (Covestro AG, Leverkusen, DE) |

Beispiel 1:

987,0 g PolyTHF 2000, 375,4 g PolyTHF 1000, 761,3 g Desmophen C2200 und 44,3 g Polyether LB 25 wurden in einer Standard-Rührapparatur auf 70°C aufgeheizt. Anschließend wurde bei 70°C innerhalb von 5 min ein Gemisch aus 237,0 g Hexamethylendiisocyanat und 313,2 g Isophorondiisocyanat zugegeben und bei 120°C gerührt, bis der theoretische NCO-Wert erreicht war. Das fertige Prepolymer wurde mit 4830 g Aceton gelöst und dabei auf 50°C abgekühlt und anschließend wurde eine Lösung aus 25,1 g Ethylendiamin, 116,5 g Isophorondiamin, 61,7 g Diaminosulfonat und 1030 g Wasser innerhalb von 10 min zudosiert. Die Nachrührzeit betrug 10 min. Dann wurde durch Zugabe von 1250 g Wasser dispergiert. Es folgte die Entfernung des Lösemittels durch Destillation im Vakuum. Der Restgehalt an Aceton lag bei unter 1 Gew.- % bezogen auf die fertige Dispersion.

Die erhaltene weiße Dispersion hatte die nachfolgenden Eigenschaften:

| | |
|---|---|
| Feststoffgehalt: | 61% |

(fortgesetzt)

| Partikelgröße (LKS): | 312 nm |
|---|---|
| Viskosität (Viskosimeter, 23 °C): | 241 mPas |
| pH (23°C): | 6,02 |

**Beispiel 2:**

450 g PolyTHF 1000 und 2100 g PolyTHF 2000 wurden auf 70°C aufgeheizt. Anschließend wurde bei 70°C innerhalb von 5 min ein Gemisch aus 225,8 g Hexamethylendiisocyanat und 298,4 g Isophorondiisocyanat zugegeben und solange bei 100-115°C gerührt bis der theoretische NCO-Wert unterschritten war. Das fertige Prepolymer wurde mit 5460 g Aceton bei 50°C gelöst und anschließend eine Lösung aus 29,5 g Ethylendiamin, 143,2 g Diaminosulfonat und 610 g Wasser innerhalb von 10 min zudosiert. Die Nachrührzeit betrug 15 min. Danach wurde innerhalb von 10 min durch Zugabe von 1880 g Wasser dispergiert. Es folgte die Entfernung des Lösemittels durch Destillation im Vakuum und es wurde eine lagerstabile Dispersion erhalten. Der Restgehalt an Aceton lag bei unter 1 Gew.-% bezogen auf die fertige Dispersion.

| Feststoffgehalt: | 56 % |
|---|---|
| Partikelgröße (LKS): | 276 nm |
| Viskosität: | 1000 mPas |
| pH (23°C): | 7,15 |

**Beispiel 3:**

1649,0 g eines Polyesters aus Adipinsäure, Hexandiol und Neopentylglykol mit einem mittleren Molekulargewicht von 1700 g/mol wurden auf 65°C aufgeheizt. Anschließend wurden bei 70°C innerhalb von 5 min 291,7 g Hexamethylendiisocyanat zugegeben und solange bei 100-115°C gerührt bis der theoretische NCO-Wert unterschritten war. Das fertige Prepolymer wurde mit 3450 g Aceton bei 50°C gelöst und anschließend eine Lösung aus 16,8 g Ethylendiamin, 109,7 g Diaminosulfonat und 425 g Wasser innerhalb von 3 min zudosiert. Die Nachrührzeit betrug 15 min. Danach wurde innerhalb von 10 min durch Zugabe von 1880 g Wasser dispergiert. Es folgte die Entfernung des Lösemittels durch Destillation im Vakuum und es wurde eine lagerstabile Dispersion erhalten.

| Feststoffgehalt: | 42 % |
|---|---|
| Partikelgröße (LKS): | 168 nm |
| Viskosität: | 425 mPas |
| pH-Wert: | 7,07 |

**Beispiel 4:**

82,5 g PolyTHF 1000, 308 g PolyTHF 2000 und 10,0 g 2-Ethylhexanol wurden auf 70°C aufgeheizt. Anschließend wurde bei 70°C innerhalb von 5 min ein Gemisch aus 41,4 g Hexamethylendiisocyanat und 54,7g Isophorondiisocyanat zugegeben und solange bei 1 10-125°C gerührt bis der theoretische NCO-Wert unterschritten war. Das fertige Prepolymer wurde mit 880 g Aceton bei 50°C gelöst und anschließend eine Lösung aus 3,8 g Ethylendiamin, 4,6 g Isophorondiamin, 26,3 g Diaminosulfonat und 138 g Wasser innerhalb von 10 min zudosiert. Die Nachrührzeit betrug 15 min. Danach wurde innerhalb von 10 min durch Zugabe von 364 g Wasser dispergiert. Es folgte die Entfernung des Lösemittels durch Destillation im Vakuum und es wurde eine lagerstabile Dispersion erhalten.

| Feststoffgehalt: | 49 % |
|---|---|
| Partikelgröße (LKS): | 181 nm |
| Viskosität: | 1300 mPas |
| pH-Wert: | 7,22 |

**Beispiel 5: Beschichtungen mit Dispersionen**

Als Aufbaumaterial wurde ein pulverförmiges, esterbasiertes thermoplastisches Polyurethan eingesetzt, wie es in Beispiel 1 von WO 2015/197515 A1 beschrieben wurde. Zu dessen Synthese wurde aus 1 Mol Polyesterdiol mit einem zahlenmittleren Molekulargewicht von ca. 900 g/mol auf Basis von ca. 56,7 Gew.-% Adipinsäure und ca. 43,3 Gew.-% 1,4-Butandiol sowie ca. 1,45 Mol 1,4-Butandiol, ca. 0,22 Mol 1,6-Hexandiol, ca. 2,67 Mol technisches 4,4'-Diphenylmethandiisocyanat (MDI) mit >98 Gew.-% 4,4'-MDI, 0,05 Gew.-% Irganox 1010 (Pentaerythritoltetrakis(3-(3,5-di-tert-butyl-4-hydroxyphenyl)propionat) von BASF SE), 1,1 Gew.-% Licowax E (Montansäureester von Clariant) und 250 ppm Zinndioctoat nach dem bekannten Statikmischer-Extruder-Verfahren hergestellt. Das erhaltene TPU hatte die folgenden Eigenschaften: Schmelzbereich (DSC, Differential Scanning Calorimetry; zweite Aufheizung mit Aufheizrate 5 K/min) von $\geq$ 20 °C bis $\leq$ 200 °C, Shore A Härte gemäß DIN ISO 7619-1 von $\geq$ 40 A bis $\leq$ 85 D, bei einer Temperatur T eine Schmelzvolumenrate (melt volume rate, MVR) gemäß ISO 1133 (10 kg) von 5 bis 15 cm$^3$/10 min und eine Änderung der Schmelzvolumenrate (10 kg) bei einer Erhöhung dieser Temperatur T um 20 °C von $\leq$ 90 cm$^3$/10 min.

Aus diesem Aufbaumaterial wurde mittels eines Pulver-Lasersinterverfahrens (SLS) ein S2-Probenkörper hergestellt.

Der erhaltene S2-Probenkörper wurde in eine wässrige Polyurethan-Dispersion mit der Bezeichnung Impranil DLN W50 (Covestro AG, Leverkusen, DE), einer anionischen aliphatischen Polyesterpolyurethan-Dispersion, für 10 min getaucht und anschließend bei Raumtemperatur bis zur Gewichtskonstanz getrocknet.

Der Probenkörper wurde vor und nach der Beschichtung mit der Polyurethan-Dispersion hinsichtlich seiner haptischen Eigenschaften auf einer Skala von 1 bis 5 Punkten bewertet, wobei eine Wertung von 1 Punkt sehr unangenehme haptische Eigenschaften und eine Wertung von 5 Punkten sehr angenehme haptische Eigenschaften bedeutet. Der Probenkörper vor der Beschichtung wurde mit 2 Punkten und nach der Beschichtung mit 4 Punkten bewertet.

Die Herstellung weiterer Probenkörper erfolgte auf einem Pulver-SLS-Gerät vom Typ Snowwhite SLS der Firma Sharebot mit folgenden Maschinen-Parametern: Temperatur der Pulveroberfläche: 80 °C, Scangeschwindigkeit: 300 mm/s, Laserleistung: 60%, "Hatch Distance": 0.2 mm, Lagenhöhe: 0.15 mm. Als Pulver wurde das esterbasierte thermoplastische Polyurethanpulver Luvosint X92A-1 WT der Firma Lehmann & Voss eingesetzt. Dieses Material hatte gemäß den Angaben im Datenblatt eine Glasübergangstemperatur (ISO 6721-1) von -13.6 °C, eine Schmelzvolumenrate MVR 190 °C/2.16 kg (ISO 1133) von 18 cm$^3$/min und eine Shore A-Härte (ISO 868) eines lasergesinterten Bauteils von 88.

Die so erhaltenen Probenkörper mit einer Porosität $\Phi$ von ca. 0.3 wurden in verschiedene wässrige Dispersionen für 10 Minuten bei Raumtemperatur getaucht, im Anschluss 15 Minuten abgetropft, dann 15 Minuten bei 70 °C und weitere 3 Minuten bei 100 °C im Umlufttrockenschrank getempert und nach weiteren 3 Tagen Lagerung bei Raumtemperatur im Zugversuchstest nach DIN 53504 geprüft. Dabei wurden der E-Modul bei 50% Dehnung sowie die Bruchdehnung und die Bruchspannung geprüft.

An den nachfolgend beschriebenen Ergebnissen lässt sich sehr gut ablesen, dass die erfindungsgemäße Kombination von polyurethanbasierten Sinterprodukten mit polyurethanhaltigen und/oder isocyanathaltigen Infiltrierungsmitteln unter vergleichbaren Bedingungen deutlich höhere Modulwerte und Zugfestigkeiten im Vergleich zu unbehandelten Proben ermöglichen. Es wird angenommen, dass dieses die besonders gute Wechselwirkung von Polyurethan-Aufbaumaterial und polyurethan- und/oder isocyanatbasierten Infiltrierungsmitteln belegt.

Die erfindungsgemäßen Beispiele sind mit * gekennzeichnet, Vergleichsbeispiele mit (V). Alle Dispersionen wurden unter Rühren 3 Stunden vor der Infiltration mit 0.3 Teilen BYK 331 (silikonhaltiges Oberflächenadditiv für lösemittelfreie und -haltige Industrie- und Autolacke sowie Druckfarben, Hersteller: Altana Group) versetzt.

| Probe Nr. | Beschreibung |
| --- | --- |
| 1 (V) | gesinterter Stab als Ausgangsprodukt, getempert wie beschrieben |
| 2 (V) | wie Probe Nr. 1, zusätzlich infiltriert mit Wasser |
| 3 (V) | wie Probe Nr. 1, zusätzlich infiltriert mit Acronal A 310 S (Acrylat-Copolymer-Dispersion, 50% Feststoffe; BASF SE) |
| 4* | wie Probe Nr. 1, zusätzlich infiltriert mit Dispercoll U54 (Polyurethandispersion, 50% Feststoffe; Covestro AG) |
| 5* | wie Probe Nr. 1, zusätzlich infiltriert mit Bayhydur 3100, 50% in Wasser (hydrophiliertes Isocyanat; Covestro AG) |
| 6* | wie Probe Nr. 1, zusätzlich infiltriert mit einer Mischung aus Baydrol UH 2557 (Polyurethandispersion, 30% Feststoffe; Covestro AG) und 10 Gew.-% Bayhydur 3100 |

Die Massenzunahmen der Proben nach den Infiltrierungen waren:

| Probe Nr. | Rohgewicht [g] | Zunahme [g] | Zunahme [%] |
|---|---|---|---|
| 1 (V) | 1.018 | 0 | 0 |
| 2 (V) | 1.028 | 0 | 0 |
| 3 (V) | 1.039 | 0.049 | 4.72 |
| 4* | 1.061 | 0.054 | 5.09 |
| 5* | 1.084 | 0.087 | 8.03 |
| 6* | 1.046 | 0.053 | 5.07 |

Die Ergebnisse der mechanischen Prüfungen waren:

| Probe Nr. | E-Modul bei 50% Dehnung [N/mm$^2$] | Bruchspannung [N/mm$^2$] | Bruchdehnung [%] |
|---|---|---|---|
| 1 (V) | 2.829 | 3.876 | 132 |
| 2 (V) | 2.927 | 4.242 | 147 |
| 3 (V) | 2.780 | 4.138 | 160 |
| 4* | 3.460 | 6.290 | 221 |
| 5* | 3.334 | 6.386 | 236 |
| 6* | 3.450 | 5.013 | 183 |

Es wurden weitere Untersuchungen an gedruckten S2- Probenkörper in Form von Zugstäben durchgeführt. Diese wurden im FDM-Verfahren mit einem ABS-Material (100180, ABS plastic 2, 1kg 1,75mm - natural) der Fa. German Reprap gedruckt.

Als Drucker verwendet wurde ein Prusa i3 MK2 mit einer Düse 0,4 mm und einer Temperatur von 255°C. Die Druckparameter waren: Extrusionsdüsendurchmesser 0,4mm, Lagenhöhe 0,2 mm, Druckgeschwindigkeit 40mm/s, Infill 100%, Extrusionstemperatur 255°C, Druckbetttemperatur 100°C.

Die so erhaltenen ABS-Probenkörper in S2 Stab Form wurden in verschiedene wässrige Dispersionen für 10 Minuten bei Raumtemperatur getaucht, im Anschluss 15 Minuten abgetropft, dann 15 Minuten bei 70 °C und weitere 3 Minuten bei 100 °C im Umlufttrockenschrank getempert und nach weiteren 3 Tagen Lagerung bei Raumtemperatur im Zugversuchstest nach DIN 53504 geprüft. Dabei wurden der E-Modul bei 50% Dehnung sowie die Bruchdehnung und die Bruchspannung geprüft.

Der Probenkörper wurde vor und nach der Beschichtung mit der Polyurethan-Dispersion hinsichtlich seiner haptischen Eigenschaften auf einer Skala von 1 bis 5 Punkten bewertet, wobei eine Wertung von 1 Punkt sehr unangenehme haptische Eigenschaften und eine Wertung von 5 Punkten sehr angenehme haptische Eigenschaften bedeutet. Der Probenkörper vor der Beschichtung wurde mit 3 Punkten und nach der Beschichtung mit 4 Punkten bewertet.

| Probe Nr. | Beschreibung |
|---|---|
| 7 (V) | gedruckter Stab als Ausgangsprodukt, getempert wie beschrieben |
| 8 (V) | wie Probe Nr. 7 (V), zusätzlich infiltriert mit Dispercoll U54 (Polyurethandispersion, 50% Feststoffe; Covestro AG) |
| 9 (V) | wie Probe 7 (V), zusätzlich infiltriert mit Acronal A 310 S (Acrylat-Copolymer-Dispersion, 50% Feststoffe; BASF SE) |
| 10 (V) | wie Probe 7(V), zusätzlich infiltriert mit Bayhydur 3100, 50% in Wasser (hydrophiliertes Isocyanat; Covestro AG) |

Die Massenzunahmen der Proben nach den Infiltrierungen waren:

| Probe Nr. | Rohgewicht [g] | Gewicht nach Zunahme [g] | Zunahme [%] |
|---|---|---|---|
| 7 (V) | 1,19 | 0 | 0 |

(fortgesetzt)

| Probe Nr. | Rohgewicht [g] | Gewicht nach Zunahme [g] | Zunahme [%] |
|---|---|---|---|
| 8 (V) | 1,199 | 1,2185 | 1,62 |
| 9 (V) | 1,19047 | 1,2135 | 1,93 |
| 10 (V) | 1,1995 | 1,2235 | 2,00 |

Die Ergebnisse der mechanischen Prüfungen waren:

| Probe Nr. | E-Modul [N/mm$^2$] | Bruchspannung [N/mm$^2$] | Bruchdehnung [%] |
|---|---|---|---|
| 7 (V) | 1580 | 33 | 4,4 |
| 8 (V) | 1600 | 34 | 2,7 |
| 9 (V) | 1580 | 36 | 4,8 |
| 10 (V) | 1550 | 36 | 3,7 |

Es ist deutlich erkennbar, dass die Beschichtung mit erfindungsgemäßen Beschichtungen von nichterfindungsgemäßen Materialien wie ABS Kunststoff, in Form von S2 Prüfstäben über das Additive Fertigungsverfahren FDM wie oben beschrieben hergestellt, zwar erwartungsgemäß eine fühlbare Verbesserung der haptischen Oberflächeneigenschaften erzeugt, aber keinen signifikanten Einfluss auf die mechanischen Eigenschaften der Bauteile ausübt also keine Verbesserung von mechanischen Eigenschaften zeigt.

**Patentansprüche**

1. Verfahren zur Herstellung eines zumindest teilweise beschichteten Gegenstands, umfassend den Schritt der Herstellung des Gegenstands mittels eines additiven Fertigungsverfahrens aus einem Aufbaumaterial, wobei das Aufbaumaterial ein thermoplastisches Polyurethan-Material umfasst,
   **dadurch gekennzeichnet, dass**
   das Verfahren nach der Herstellung des Gegenstands weiterhin den Schritt umfasst:
   zumindest teilweises Kontaktieren des Gegenstands mit einer Zubereitung, welche ausgewählt ist aus:

   - wässrige Polyurethan-Dispersion,
   - wässrige Dispersion eines OH-Gruppen aufweisenden Polymers, wobei diese Dispersion weiterhin eine NCO-Gruppen aufweisende Verbindung enthält,
   - wässrige Zubereitung einer NCO-Gruppen enthaltende Verbindung, wobei diese Zubereitung keine OH-Gruppen aufweisenden Polymere enthält,

   oder eine Kombination aus mindestens zwei hiervon.

2. Verfahren gemäß Anspruch 1, **dadurch gekennzeichnet, dass** die wässrige Polyurethan-Dispersion erhältlich ist, indem

   A) isocyanatfunktionelle Prepolymere aus

   A1) organischen Polyisocyanaten,
   A2) polymeren Polyolen mit zahlenmittleren Molekulargewichten von 400 bis 8000 g/mol und OH-Funktionalitäten von 1,5 bis 6 und
   A3) gegebenenfalls hydroxyfunktionellen Verbindungen mit Molekulargewichten von 62 bis 399 g/mol sowie gegebenenfalls enthaltend olefinisch ungesättigte Verbindungen sowie
   A4) gegebenenfalls isocyanatreaktiven, anionischen oder potentiell anionischen und/oder gegebenenfalls nichtionischen Hydrophilierungsmitteln,

   hergestellt werden, und

B) deren freie NCO-Gruppen dann ganz oder teilweise

    B1) gegebenenfalls mit aminofunktionellen Verbindungen mit Molekulargewichten von 32 bis 400 g/mol und
    B2) mit aminofunktionellen, anionischen oder potentiell anionischen Hydrophilierungsmitteln

unter Kettenverlängerung umgesetzt werden und die Prepolymere vor, während oder nach Schritt B) in Wasser dispergiert werden.

3. Verfahren gemäß Anspruch 1 oder 2, **dadurch gekennzeichnet, dass** die wässrige Dispersion eines OH-Gruppen aufweisenden Polymers, welche weiterhin eine NCO-Gruppen aufweisende Verbindung enthält, die Komponenten umfasst:

    A) eine oder mehrere Verbindungen mit unvernetzten, polymergebundenen (Meth-)Acrylaten mit einer OH-Zahl von 20 bis 300 mg KOH/g Substanz und/oder
    B) gegebenenfalls von A) verschiedene Verbindungen mit mindestens einer gegenüber Isocyanat reaktiven Gruppe und mindestens einer strahlenhärtbaren Doppelbindung,
    C) gegebenenfalls eine oder mehrere Verbindungen, die mindestens eine gegenüber Isocyanat reaktiven Gruppe, aber keine strahlenhärtbare Doppelbindungen besitzen,
    D) eine oder mehrere Verbindungen mit mindestens einer gegenüber Isocyanat reaktiven Gruppe und zusätzlich nichtionischen, anionischen oder zur Ausbildung von anionischen Gruppen befähigten Gruppen, die für die Polyurethanacrylate dispergierend wirken oder D') eine oder mehrere Verbindungen mit mindestens einer gegenüber Isocyanat reaktiven Gruppe und zusätzlich kationischen oder zur Ausbildung von kationischen Gruppen befähigten Gruppen, die für die Polyurethanacrylate dispergierend wirken,
    E) ein oder mehrere organische Verbindungen mit 2 oder mehr Isocyanatgruppen,
    F) gegebenenfalls Neutralisationsamine in Kombination mit Verbindungen D) oder F') Neutralisationssäuren F') in Kombination mit Verbindungen D'),
    G) gegebenenfalls Urethanisierungskatalysatoren, sowie gegebenenfalls weitere Hilfs- und Zusatzstoffe.

4. Verfahren gemäß einem der Ansprüche 1 bis 3, **dadurch gekennzeichnet, dass** in der wässrigen Zubereitung der NCO-Gruppen enthaltende Verbindung ohne OH-Gruppen aufweisende Polymere in der Zubereitung die NCO-Gruppen enthaltende Verbindung eine Verbindung auf Basis aliphatischer, cycloaliphatischer, araliphatischer und/oder aromatischer Diisocyanate ist mit:

    a) einer mittleren Isocyanatfunktionalität von mindestens 2,0
    b) einem Gehalt an Isocyanatgruppen (berechnet als NCO; Molekulargewicht = 42) von 5,0 bis 25,0 Gew.-% und
    c) einer anionisch und/oder nichtionisch hydrophilierenden Komponente.

5. Verfahren gemäß einem der Ansprüche 1 bis 4, **dadurch gekennzeichnet, dass** Abschnitte des Gegenstandes, welche mit der Zubereitung kontaktiert werden, eine Porosität $\Phi$ von $\geq 0.01$ bis $\leq 0.6$ aufweisen und die Porosität $\Phi$ ausgedrückt wird als:

$$\Phi = 1 - ( \rho / \rho_0 )$$

wobei $\rho$ die Dichte des Volumens bezeichnet, welches den Abschnitten des Gegenstands zugeordnet ist, welche mit der Zubereitung kontaktiert werden und $\rho_0$ die Reindichte des Aufbaumaterials bezeichnet.

6. Verfahren gemäß einem der Ansprüche 1 bis 5, **dadurch gekennzeichnet, dass** die Herstellung des Gegenstands mittels des additiven Fertigungsverfahrens die Schritte umfasst:

    - Auftragen einer Schicht aus das Aufbaumaterial aufweisenden Partikeln auf eine Zielfläche;
    - Einwirken von Energie auf einen ausgewählten Teil der Schicht, entsprechend einem Querschnitt des Gegenstands, so dass die Partikel im ausgewählten Teil verbunden werden;
    - Wiederholen der Schritte des Auftragens und des Einwirkens von Energie für eine Mehrzahl von Schichten, so dass die verbundenen Teile der benachbarten Schichten sich verbinden, um den Gegenstand zu bilden.

7. Verfahren gemäß Anspruch 6, **dadurch gekennzeichnet, dass** das Einwirken von Energie auf einen ausgewählten Teil der Schicht, entsprechend einem Querschnitt des Gegenstandes, so dass die Partikel im ausgewählten Teil verbunden werden, den folgenden Schritt umfasst:

- Bestrahlen eines ausgewählten Teils der Schicht, entsprechend einem Querschnitt des Gegenstandes, mit einem Energiestrahl, so dass die Partikel im ausgewählten Teil verbunden werden.

**8.** Verfahren gemäß Anspruch 6, **dadurch gekennzeichnet, dass** das Einwirken von Energie auf einen ausgewählten Teil der Schicht, entsprechend einem Querschnitt des Gegenstandes, so dass die Partikel im ausgewählten Teil verbunden werden, die folgenden Schritte umfasst:

- Auftragen einer Flüssigkeit auf einen ausgewählten Teil der Schicht, entsprechend einem Querschnitt des Gegenstandes, wobei die Flüssigkeit die Absorption von Energie in den von ihr kontaktierten Bereichen der Schicht relativ zu den nicht von ihr kontaktierten Bereichen erhöht;
- Bestrahlen der Schicht, so dass die Partikel in von der Flüssigkeit kontaktierten Bereichen der Schicht miteinander verbunden werden und die Partikel in nicht von der Flüssigkeit kontaktierten Bereichen der Schicht nicht miteinander verbunden werden.

**9.** Verfahren gemäß einem der Ansprüche 1 bis 8, **dadurch gekennzeichnet, dass** die Herstellung des Gegenstands mittels des additiven Fertigungsverfahrens die Schritte umfasst:

- Auftragen eines Filaments eines zumindest teilweise geschmolzenen Aufbaumaterials auf einen Träger, so dass eine Lage des Aufbaumaterials erhalten wird, welche einem ersten ausgewählten Querschnitt des Gegenstands entspricht;
- Auftragen eines Filaments des zumindest teilweise geschmolzenen Aufbaumaterials auf eine zuvor aufgetragene Lage des Aufbaumaterials, so dass eine weitere Lage des Aufbaumaterials erhalten wird, welche einem weiteren ausgewählten Querschnitt des Gegenstands entspricht und welche mit der zuvor aufgetragenen Lage verbunden ist;
- Wiederholen des Schritts des Auftragens eines Filaments des zumindest teilweise geschmolzenen Aufbaumaterials auf eine zuvor aufgetragene Lage des Aufbaumaterials, bis der Gegenstand gebildet ist.

**10.** Verfahren gemäß einem der Ansprüche 1 bis 9, **dadurch gekennzeichnet, dass** das Aufbaumaterial ein thermoplastisches Polyurethan-Elastomer umfasst, welches und einen Schmelzbereich (DSC, Differential Scanning Calorimetry; zweite Aufheizung mit Aufheizrate 5 K/min) von $\geq$ 20 °C bis $\leq$ 240 °C aufweist, eine Shore-Härte gemäß DIN ISO 7619-1 von $\geq$ 40 A bis $\leq$ 85 D aufweist.

**11.** Verfahren gemäß einem der Ansprüche 1 bis 10, **dadurch gekennzeichnet, dass** das Aufbaumaterial ein thermoplastisches Polyurethan-Elastomer umfasst, welches

einen Schmelzbereich (DSC, Differential Scanning Calorimetry; zweite Aufheizung mit Aufheizrate 5 K/min) von $\geq$ 20 °C bis $\leq$ 240 °C aufweist,
eine Shore A Härte gemäß DIN ISO 7619-1 von $\geq$ 40 A bis $\leq$ 85 D aufweist,
bei einer Temperatur T eine Schmelzvolumenrate (melt volume rate, MVR) gemäß ISO 1133 (10 kg) von 5 bis 15 cm$^3$/10 min aufweist und
eine Änderung der Schmelzvolumenrate (10 kg) bei einer Erhöhung dieser Temperatur T um 20 °C von $\leq$ 90 cm$^3$/10 min aufweist.

**12.** Verfahren gemäß einem der Ansprüche 1 bis 11, wobei das Aufbaumaterial ein thermoplastisches Polyurethanelastomer umfasst, das erhältlich ist aus der Reaktion der Komponenten:

a) mindestens ein organisches Diisocyanat
b) mindestens eine mit gegenüber Isocyanatgruppen reaktiven Gruppen aufweisenden Verbindung mit einem zahlenmittleren Molekulargewicht ($M_n$) von $\geq$ 500 g/mol bis $\leq$ 6000 g/mol und einer zahlenmittleren Funktionalität der Gesamtheit der Komponenten unter b) von $\geq$ 1,8 bis $\leq$ 2,5
c) mindestens ein Kettenverlängerungsmittel mit einem Molekulargewicht (Mn) von 60 - 450 g/mol und einer zahlenmittleren Funktionalität der Gesamtheit der Kettenverlängerungsmittel unter c) von 1,8 bis 2,5.

**13.** Verfahren gemäß einem der Ansprüche 1 bis 9, **dadurch gekennzeichnet, dass** das Aufbaumaterial ein thermoplastisches Polyurethan-Elastomer umfasst, welches einen Schmelzbereich (DSC, differential scanning calorimetry; 2. Aufheizung mit Aufheizrate 5 K/min.) von $\geq$ 20 °C bis $\leq$ 100 °C aufweist und einen Betrag der komplexen Viskosität

$|\eta^*|$ (bestimmt durch Viskosimetriemessung in der Schmelze mit einem Platte/Platte-Oszillationsscherviskosimeter bei 100 °C und einer Kreisfrequenz von 1/s) von $\geq$ 10 Pas bis $\leq$ 1000000 Pas aufweist.

14. Verfahren gemäß einem der Ansprüche 1 bis 13, **dadurch gekennzeichnet, dass** das Aufbaumaterial ein thermoplastisches Polyurethan-Elastomer umfasst, das erhältlich ist aus der Reaktion einer Polyisocyanatkomponente und einer Polyolkomponente, wobei die Polyolkomponente ein Polyesterpolyol umfasst, welches einen Stockpunkt (ASTM D5985) von $\geq$ 25 °C aufweist.

15. Zumindest teilweise beschichteter Gegenstand, erhalten durch ein Verfahren gemäß einem der Ansprüche 1 bis 14.

**Claims**

1. A process for producing an at least partially coated article comprising the step of producing the article by means of an additive manufacturing process from a construction material, wherein the construction material comprises a thermoplastic polyurethane material,
   **characterized in that**
   after the production of the article the process further comprises the step of:
   at least partially contacting the article with a preparation selected from:

   - aqueous polyurethane dispersion,
   - aqueous dispersion of an OH-containing polymer, wherein this dispersion further contains an NCO-containing compound,
   - aqueous preparation of an NCO-containing compound, wherein this preparation contains no OH-containing polymers,

   or a combination of at least two of these.

2. The process as claimed in claim 1, **characterized in that** the aqueous polyurethane dispersion is obtainable when

   A) isocyanate-functional prepolymers are produced from

      A1) organic polyisocyanates,
      A2) polymeric polyols having number-average molecular weights of 400 to 8000 g/mol and OH functionalities of 1.5 to 6 and
      A3) optionally hydroxyl-functional compounds having molecular weights of 62 to 399 g/mol and optionally containing olefinically unsaturated compounds and
      A4) optionally isocyanate-reactive, anionic or potentially anionic and/or optionally nonionic hydrophilization agents,

   and
   B) the free NCO groups thereof are then wholly or partially reacted

      B1) optionally with amino-functional compounds having molecular weights of 32 to 400 g/mol and
      B2) with amino-functional, anionic or potentially anionic hydrophilization agents

   by chain extension and the prepolymers are dispersed in water before, during or after step B).

3. The process as claimed in claim 1 or 2, **characterized in that** the aqueous dispersion of an OH-containing polymer which further contains an NCO-containing compound comprises the components:

   A) one or more compounds comprising uncrosslinked polymer-bonded (meth)acrylates having an OH number of 20 to 300 mg KOH/g of substance and/or
   B) optionally compounds distinct from A) having at least one isocyanate-reactive group and at least one radiation-curable double bond,
   C) optionally one or more compounds having at least one isocyanate-reactive group but no radiation-curable double bonds,
   D) one or more compounds having at least one isocyanate-reactive group and additionally groups which are nonionic, anionic or capable of forming anionic groups and have a dispersing effect for the polyurethane acrylates or D') one or more compounds having at least one isocyanate-reactive group and additionally groups which are cationic or capable of forming cationic groups and have a dispersing effect for the polyurethane acrylates,

E) one or more organic compounds having 2 or more isocyanate groups,

F) optionally neutralizing amines in combination with compounds D) or F') neutralization acids F') in combination with compounds D'),

G) optionally urethanization catalysts and optionally further assistant and additive substances.

4. The process as claimed in any of claims 1 to 3, **characterized in that** the NCO-containing compound in the aqueous preparation of the NCO-containing compound without OH-containing polymers in the preparation is a compound based on aliphatic, cycloaliphatic, araliphatic and/or aromatic diisocyanates having:

   a) an average isocyanate functionality of at least 2.0
   b) a content of isocyanate groups (calculated as NCO; molecular weight = 42) of 5.0% to 25.0% by weight and
   c) an anionically and/or nonionically hydrophilizing component.

5. The process as claimed in any of claims 1 to 4, **characterized in that** sections of the article that are contacted with the preparation have a porosity $\Phi$ of $\geq 0.01$ to $\leq 0.6$ and the porosity $\Phi$ is expressed as:

$$\Phi = 1 - (\rho / \rho_0)$$

wherein $\rho$ represents the density of the volume assigned to the sections of the article that are contacted with the preparation and $\rho_0$ represents the true density of the construction material.

6. The process as claimed in any of claims 1 to 5, **characterized in that** the production of the article by means of the additive manufacturing process comprises the steps of:

   - applying a layer of particles comprising the construction material onto a target surface;
   - energizing a selected portion of the layer corresponding to a cross section of the article to join the particles in the selected portion;
   - repeating the steps of applying and energizing for a plurality of layers so that the joined portions of the adjacent layers become joined to form the article.

7. The process as claimed in claim 6, **characterized in that** the energizing of a selected portion of the layer corresponding to a cross section of the article to join the particles in the selected portion comprises the step of:

   - irradiating a selected portion of the layer corresponding to a cross section of the article with an energy beam to join the particles in the selected portion.

8. The process as claimed in claim 6, **characterized in that** the energizing of a selected portion of the layer corresponding to a cross section of the article to join the particles in the selected portion comprises the steps of:

   - applying a liquid to a selected portion of the layer corresponding to a cross section of the article, wherein the liquid increases the absorption of energy in the regions of the layer contacted by it relative to the regions not contacted by it;
   - irradiating the layer so that the particles in regions of the layer contacted by the liquid are joined to one another and the particles in regions of the layer not contacted by the liquid are not joined to one another.

9. The process as claimed in any of claims 1 to 8, **characterized in that** the production of the article by means of the additive manufacturing process comprises the steps of:

   - applying a filament of an at least partially molten construction material onto a carrier to obtain a layer of the construction material corresponding to a first selected cross section of the article;
   - applying a filament of the at least partially molten construction material onto a previously applied layer of the construction material to obtain a further layer of the construction material which corresponds to a further selected cross section of the article and which is joined to the previously applied layer;
   - repeating the step of applying a filament of the at least partially molten construction material onto a previously applied layer of the construction material until the article has been formed.

**10.** The process as claimed in any of claims 1 to 9, **characterized in that** the construction material comprises a thermoplastic polyurethane elastomer having a melting range (DSC, differential scanning calorimetry; second heating at a heating rate of 5 K/min) of $\geq$ 20°C to $\leq$ 240°C, a Shore hardness according to DIN ISO 7619-1 of $\geq$ 40 A to $\leq$ 85 D.

**11.** The process as claimed in any of claims 1 to 10, **characterized in that** the construction material comprises a thermoplastic polyurethane elastomer which

has a melting range (DSC, differential scanning calorimetry; second heating at a heating rate of 5 K/min) of $\geq$ 20°C to $\leq$ 240°C,
has a Shore A hardness according to DIN ISO 7619-1 of $\geq$ 40 A to $\leq$ 85 D,
has a melt volume rate (MVR) according to ISO 1133 (10 kg) at a temperature T of 5 to 15 cm$^3$/10 min and exhibits a change in the melt volume rate (10 kg) at an increase of this temperature T by 20°C of $\leq$ 90 cm$^3$/10 min.

**12.** The process as claimed in any of claims 1 to 11, wherein the construction material comprises a thermoplastic polyurethane elastomer obtainable from the reaction of the following components:

a) at least one organic diisocyanate
b) at least one compound having isocyanate-reactive groups and having a number-average molecular weight ($M_n$) of $\geq$ 500 g/mol to $\leq$ 6000 g/mol and a number-average functionality of the sum total of the components b) of $\geq$ 1.8 to $\leq$ 2.5
c) at least one chain extender having a molecular weight (Mn) of 60-450 g/mol and a number-average functionality of the sum total of the chain extenders c) of 1.8 to 2.5.

**13.** The process as claimed in any of claims 1 to 9, **characterized in that** the construction material comprises a thermoplastic polyurethane elastomer having a melting range (DSC, differential scanning calorimetry; 2nd heating at a heating rate of 5 K/min) of $\geq$ 20 °C to $\leq$ 100 °C and a magnitude of complex viscosity $|\eta^*|$ (determined by viscometry measurement in the melt with a plate/plate oscillation shear viscometer at 100°C and an angular frequency of 1/s) of $\geq$ 10 Pas to $\leq$ 1 000 000 Pas.

**14.** The process as claimed in any of claims 1 to 13, **characterized in that** the construction material comprises a thermoplastic polyurethane elastomer obtainable from the reaction of a polyisocyanate component and a polyol component, wherein the polyol component comprises a polyester polyol having pour point (ASTM D5985) of $\geq$ 25°C.

**15.** An at least partially coated article obtained by a process as claimed in any of claims 1 to 14.

**Revendications**

**1.** Procédé pour la fabrication d'un objet au moins partiellement revêtu, comprenant l'étape de la fabrication de l'objet au moyen d'un procédé de fabrication additive sur un matériau de construction, le matériau de construction comprenant un matériau thermoplastique à base de polyuréthane, **caractérisé en ce que** le procédé, après la fabrication de l'objet, comprend en outre l'étape de :

mise en contact au moins partielle de l'objet avec une préparation, qui est choisie parmi :

- une dispersion aqueuse de polyuréthane,
- une dispersion aqueuse d'un polymère présentant des groupes OH, cette dispersion contenant en outre un composé présentant des groupes NCO,
- une préparation aqueuse d'un composé contenant des groupes NCO, cette préparation ne contenant pas de polymère présentant des groupes OH,

ou une combinaison d'au moins deux de celles-ci.

**2.** Procédé selon la revendication 1, **caractérisé en ce que** la dispersion aqueuse de polyuréthane peut être obtenue **en ce que**

A) des prépolymères à fonctionnalité isocyanate sont préparés à partir

A1) de polyisocyanates organiques,

A2) de polyols polymères présentant des poids moléculaires moyens en nombre de 400 à 8000 g/mole et des fonctionnalités OH de 1,5 à 6 et

A3) le cas échéant de composés à fonctionnalité hydroxy présentant des poids moléculaires de 62 à 399 g/mole ainsi que contenant le cas échéant des liaisons oléfiniquement insaturées ainsi que

A4) le cas échéant d'agents d'hydrophilisation réactifs avec isocyanate, anioniques ou potentiellement anioniques et/ou le cas échéant non ioniques,

et

B) leurs groupes NCO libres sont alors transformés totalement ou partiellement

B1) le cas échéant avec des composés à fonctionnalité amino présentant des poids moléculaires de 32 à 400 g/mole et

B2) avec des agents d'hydrophilisation à fonctionnalité amino, anioniques ou potentiellement anioniques

avec allongement de chaîne et les prépolymères sont dispersés dans l'eau avant, pendant ou après l'étape B).

3. Procédé selon la revendication 1 ou 2, **caractérisé en ce que** la dispersion aqueuse d'un polymère présentant des groupes OH, qui contient en outre un composé présentant des groupes NCO, contient les composants :

A) un ou plusieurs composés présentant des (méth)acrylates non réticulés, liés à un polymère, présentant un indice OH de 20 à 300 mg de KOH/g de substance et/ou

B) le cas échéant des composés, différents de A), présentant au moins un groupe réactif par rapport à isocyanate et au moins une double liaison durcissable par un rayonnement,

C) le cas échéant un ou plusieurs composés qui possèdent au moins un groupe réactif par rapport à isocyanate mais pas de doubles liaisons durcissables par un rayonnement,

D) un ou plusieurs composés présentant au moins un groupe réactif par rapport à isocyanate et en plus des groupes non ioniques, anioniques ou aptes à la formation de groupes anioniques, qui ont une action dispersante pour les polyuréthane-acrylates ou D') un ou plusieurs composés présentant au moins un groupe réactif par rapport à isocyanate et en plus des groupes cationiques ou aptes à la formation de groupes cationiques, qui ont une action dispersante pour les polyuréthane-acrylates,

E) un ou plusieurs composés organiques présentant 2 groupes isocyanate ou plus,

F) le cas échéant des amines de neutralisation en combinaison avec les composés D) ou F') des acides de neutralisation F') en combinaison avec les composés D'),

G) le cas échéant des catalyseurs d'uréthanisation, ainsi que le cas échéant d'autres adjuvants et additifs.

4. Procédé selon l'une quelconque des revendications 1 à 3, **caractérisé en ce que** dans la préparation aqueuse du composé contenant des groupes NCO sans polymères présentant des groupes OH dans la préparation, le composé contenant des groupes NCO est un composé à base de diisocyanates aliphatiques, cycloaliphatiques, araliphatiques et/ou aromatiques présentant :

a) une fonctionnalité moyenne d'isocyanate d'au moins 2,0,

b) une teneur en groupes isocyanate (exprimée en NCO; poids moléculaire = 42) de 5,0 à 25,0% en poids et

c) un composant d'hydrophilisation anionique et/ou non ionique.

5. Procédé selon l'une quelconque des revendications 1 à 4, **caractérisé en ce que** des sections de l'objet qui sont mises en contact avec la préparation, présentent une porosité $\Phi$ de $\geq 0,01$ à $\leq 0,6$ et la porosité $\Phi$ est exprimée comme :

$$\Phi = 1 - (\rho/\rho_0)$$

$\rho$ désignant la densité du volume qui est associé aux sections de l'objet qui sont mises en contact avec la préparation et $\rho_0$ désignant la densité pure du matériau de construction.

6. Procédé selon l'une quelconque des revendications 1 à 5, **caractérisé en ce que** la fabrication de l'objet au moyen du procédé de fabrication additive comprend les étapes :

- application d'une couche de particules présentant le matériau de construction sur une surface cible ;
- action d'énergie sur une partie sélectionnée de la couche, correspondant à une section transversale de l'objet, de telle sorte que les particules dans la partie sélectionnée sont reliées ;
- répétition des étapes d'application et d'action d'énergie pour une multitude de couches, de telle sorte que les parties reliées des couches adjacentes se relient pour former l'objet.

7. Procédé selon la revendication 6, **caractérisé en ce que** l'action d'énergie sur une partie sélectionnée de la couche, correspondant à une section transversale de l'objet, de telle sorte que les particules dans la partie sélectionnée sont reliées, comprend l'étape suivante ;

- irradiation d'une partie sélectionnée de la couche, correspondant à une section transversale de l'objet, par un rayon d'énergie de telle sorte que les particules dans la partie sélectionnée sont reliées.

8. Procédé selon la revendication 6, **caractérisé en ce que** l'action d'énergie sur une partie sélectionnée de la couche, correspondant à une section transversale de l'objet, de telle sorte que les particules dans la partie sélectionnée sont reliées, comprend les étapes suivantes :

- application d'un liquide sur une partie sélectionnée de la couche, correspondant à une section de l'objet, le liquide augmentant l'absorption d'énergie dans les zones de la couche mises en contact avec celui-ci par rapport aux zones non mises en contact avec celui-ci ;
- irradiation de la couche, de telle sorte que les particules dans les zones de la couche mises en contact avec le liquide sont reliées les unes aux autres et les particules dans les zones de la couche non mises en contact avec le liquide ne sont pas reliées les unes aux autres.

9. Procédé selon l'une quelconque des revendications 1 à 8, **caractérisé en ce que** la fabrication de l'objet au moyen du procédé de fabrication additive comprend les étapes :

- application d'un filament d'un matériau de construction au moins partiellement fondu sur un support, de manière à obtenir une couche du matériau de construction qui correspond à une première section transversale sélectionnée de l'objet ;
- application d'un filament dudit matériau de construction au moins partiellement fondu sur une couche appliquée au préalable du matériau de construction de manière à obtenir une autre couche du matériau de construction qui correspond à une autre section transversale sélectionnée de l'objet et qui est reliée à la couche appliquée au préalable ;
- répétition de l'étape d'application d'un filament du matériau de construction au moins partiellement fondu sur une couche appliquée au préalable du matériau de construction jusqu'à ce que l'objet soit formé.

10. Procédé selon l'une quelconque des revendications 1 à 9, **caractérisé en ce que** le matériau de construction comprend un élastomère thermoplastique à base de polyuréthane, qui présente une plage de fusion (DSC, calorimétrie différentielle à balayage ; deuxième chauffage à une vitesse de chauffage de 5 K/min) de $\geq$ 20°C à $\leq$ 240°C, une dureté Shore selon la norme DIN ISO 7619-1 de $\geq$ 40 A à $\leq$ 85 D.

11. Procédé selon l'une quelconque des revendications 1 à 10, **caractérisé en ce que** le matériau de construction comprend un élastomère thermoplastique à base de polyuréthane qui présente

- une plage de fusion (DSC, calorimétrie différentielle à balayage ; deuxième chauffage à une vitesse de chauffage de 5°C/min) de $\geq$ 20°C à $\leq$ 240°C,
- une dureté Shore A selon la norme DIN ISO 7619-1 de $\geq$ 40 A à $\leq$ 85 D,
- à une température T, un indice de fusion à chaud en volume (melt volume rate, MVR) selon la norme ISO 1133 (10 kg) de 5 à 15 $cm^3$/10 min et
- une modification de l'indice de fusion à chaud en volume (10 kg) à une augmentation de cette température T de 20°C de $\leq$ 90 $cm^3$/10 min.

12. Procédé selon l'une quelconque des revendications 1 à 11, le matériau de construction comprenant un élastomère thermoplastique à base de polyuréthane qui peut être obtenu par la réaction des composants :

a) au moins un diisocyanate organique,
b) au moins un composé présentant des groupes réactifs par rapport aux groupes isocyanate, lequel composé présente un poids moléculaire moyen en nombre ($M_n$) de $\geq$ 500 g/mole à $\leq$ 6000 g/mole et une fonctionnalité moyenne en nombre de la totalité des composants sous b) de $\geq$ 1,8 à $\leq$ 2,5,
c) au moins un agent d'allongement de chaîne présentant un poids moléculaire ($M_n$) de 60-450 g/mole et une fonctionnalité moyenne en nombre de la totalité des agents d'allongement de chaîne sous c) de 1,8 à 2,5.

13. Procédé selon l'une quelconque des revendications 1 à 9, **caractérisé en ce que** le matériau de construction comprend un élastomère thermoplastique à base de polyuréthane, qui présente une plage de fusion (DSC, calorimétrie différentielle à balayage ; 2ème chauffage à une vitesse de chauffage de 5 K/min) de $\geq$ 20°C à $\leq$ 100°C et une contribution de la viscosité complexe $|\eta^*|$ (déterminée par mesure viscosimétrique en masse fondue à l'aide d'un viscosimètre à cisaillement par oscillation plaque/plaque à 100°C et à une fréquence angulaire de 1/s) de $\geq$ 10 Pa.s à $\leq$1.000.000 Pa.s.

14. Procédé selon l'une quelconque des revendications 1 à 13, **caractérisé en ce que** le matériau de construction comprend un élastomère thermoplastique à base de polyuréthane qui peut être obtenu par la réaction d'un composant polyisocyanate et d'un composant polyol, le composant polyol comprenant un polyester-polyol qui présente un point d'écoulement (ASTM D5985) $\geq$ 25°C.

15. Objet au moins partiellement revêtu, obtenu par un procédé selon l'une quelconque des revendications 1 à 14.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016030490 A1
- DE 2446440 A
- WO 0188006 A
- EP 916647 A
- EP 928799 A
- EP 0959087 B1
- DE 2901774 A
- EP 0192946 A1
- WO 2015197515 A1

**In der Beschreibung aufgeführte Nicht-Patentliteratur**

- **JIAYI ZHU ; JULIA L. CHEN ; ROBERT K. LADE JR. ; WIESLAW J. SUSZYNSKI ; LORRAINE F. FRANCIS.** Water-based coatings for 3D printed parts. *J. Coat. Technol. Res.,* 2015, vol. 12 (5), 889-897
- Ullmanns Encyclopädie der technischen Chemie. Verlag Chemie, vol. 19, 31-38
- Polyurethane. **J.H. SAUNDERS ; K.C. FRISCH.** High Polymers. Verlag Interscience Publishers, 1962, vol. XVI
- **R. GÄCHTER ; H. MÜLLER.** Taschenbuch für Kunststoff- Additive. Hanser Verlag, 1990